# EUROPEAN PATENT APPLICATION

(11) **EP 4 842 138 A1**
(43) Date of publication of application: **18.11.2026**
(21) Application number: 25744629.4
(22) Date of filing: 22.01.2025
(51) Int. Cl.: H04W 80/10, H04W 12/08, H04W 12/10

(54) **COMMUNICATION METHOD, APPARATUS AND SYSTEM**

(30) Priority: 27.01.2024 CN 202410125338
(71) Applicant: Huawei Technologies Co., Ltd., Shenzhen, Guangdong 518129 (CN)
(72) Inventor: ZONG, Zaifeng, Shenzhen, Guangdong 518129 (CN); YIN, Yu, Shenzhen, Guangdong 518129 (CN)
(74) Representative: Huawei European IPR
(86) International application number: PCT/CN2025/074053
(87) International publication number: WO 2025/157191

(57) **Abstract**

Embodiments of this application disclose a communication method, an apparatus, and a system, and relate to the field of communication technologies, to improve NAS message transmission efficiency. The method includes: A terminal device sends a first request message to a first network element via a first NAS session, where the first NAS session is used for transmission of a NAS message between the terminal device and the first network element. Then, the terminal device receives an identifier of a second NAS session, where the second NAS session is used for transmission of a NAS message between the terminal device and a second network element. Further, the terminal device may send a first NAS message to the second network element via the second NAS session based on the identifier of the second NAS session.

## Description

This application claims priority to Chinese Patent Application No. 202410125338.3, filed with the China National Intellectual Property Administration on January 27, 2024 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, an apparatus, and a system.

### BACKGROUND

In a 5th generation (5th generation, 5G) mobile communication system, information may be transmitted between a terminal device and a core network (core network, CN) network element via a non-access stratum (non-access stratum, NAS) message.

Currently, all NAS messages between the terminal device and the core network element are transmitted through an access and mobility management network element (access and mobility management function, AMF) network element. In other words, the AMF network element transmits the NAS message to the target core network element of the NAS message. This NAS message transmission mode has relatively low efficiency.

### SUMMARY

Embodiments of this application provide a communication method, an apparatus, and a system, to improve NAS message transmission efficiency.

The following technical solutions are used in embodiments of this application.

According to a first aspect, a communication method is provided. The method may be performed by a terminal device; may be performed by a component (for example, a processor, a chip, or a chip system) of the terminal device; or may be implemented by using a logical module or software that can implement all or some functions of the terminal device. An example in which the terminal device is an execution body of the method is used below for description. The method includes: The terminal device sends a first request message to a first network element via a first NAS session, where the first NAS session is used for transmission of a NAS message between the terminal device and the first network element. Then, the terminal device receives an identifier of a second NAS session, where the second NAS session is used for transmission of a NAS message between the terminal device and a second network element. Further, the terminal device may send a first NAS message to the second network element via the second NAS session based on the identifier of the second NAS session.

For the first request message, in a possible case, the first request message is used to request a service. In another possible case, the first request message is used to request a service, and is further used to request establishment of the NAS session between the terminal device and the second network element. In another possible case, the first request message is used to request establishment of the NAS session between the terminal device and the second network element.

If the first request message is used to request the service, the service is provided by the second network element. If the first request message is used to request establishment of the NAS session between the terminal device and the second network element (the foregoing case in which the first request message is used to request the service, and is further used to request establishment of the NAS session between the terminal device and the second network element; or the foregoing case in which the first request message is used to request establishment of the NAS session between the terminal device and the second network element), the second NAS session is a NAS session that is actually established between the terminal device and the second network element in response to the request of the first request message.

According to the communication method provided in this embodiment of this application, the terminal device and the second network element may establish the second NAS session when the first NAS session has been established between the terminal device and the first network element, so that the NAS message between the terminal device and the second network element can be directly transmitted via the second NAS session. In comparison with a solution in which the first network element forwards a NAS message, this improves NAS message transmission efficiency. In addition, in this solution, the NAS message transmitted between the second network element and the terminal device does not depend on the first network element, so that a principle of function decoupling between network elements can be matched, flexibility of a network architecture can be improved, and NAS message transmission security can be improved.

In a possible implementation, when the first request message is used to request establishment of the NAS session between the terminal device and the second network element, the first request message includes the identifier of the second NAS session. In this implementation, it may be considered that the first request message is used to request establishment of the second NAS session. Optionally, the identifier that is of the second NAS session and that is included in the first request message may be allocated by the terminal device to the second NAS session.

According to this solution, the terminal device may notify, by using the first request message, the first network element of the identifier of the second NAS session that is requested to be established.

In a possible implementation, the method further includes: The terminal device receives first indication information, where the first indication information indicates the terminal device to activate a security mode for the second NAS session. The security mode includes one or more of the following: performing encryption on a NAS message transmitted via the second NAS session, or performing integrity protection on a NAS message transmitted via the second NAS session. Then, the terminal device activates the security mode for the second NAS session based on the first indication information.

According to this solution, the terminal device may enable the security mode for the second NAS session, to protect the NAS message transmitted via the second NAS session, and prevent the NAS message transmitted via the second NAS session from being tampered with.

In a possible implementation, the method further includes: The terminal device generates a key of the second NAS session based on a root key of the first NAS session and the identifier of the second NAS session, where the key of the second NAS session includes at least one of the following keys: a key used to encrypt the NAS message transmitted via the second NAS session or a key used to perform integrity protection on the NAS message transmitted via the second NAS session.

According to this solution, the terminal device may locally generate the key of the second NAS session, to avoid a risk of key theft that may occur when the key is obtained from another device, and protect key security.

In a possible implementation, that the terminal device activates the security mode for the second NAS session based on the first indication information includes: The terminal device performs verification on the first indication information by using the key of the second NAS session, where the key of the second NAS session includes at least one of the following keys: the key used to encrypt the NAS message transmitted via the second NAS session or the key used to perform integrity protection on the NAS message transmitted via the second NAS session. If the verification succeeds, the terminal device activates the security mode.

According to this solution, the terminal device may activate the security mode if the security verification on the first indication information succeeds, to further ensure security of the second NAS session in the security mode.

In a possible implementation, that the terminal device sends the first request message to the first network element via the first NAS session includes: The terminal device sends a second message to an access network device, where the second message includes the first request message. Optionally, the second message may be a radio resource control (radio resource control, RRC) message. In this implementation, the second message is sent over a radio bearer corresponding to the first NAS session, and/or the second message includes an identifier of the first NAS session. The radio bearer corresponding to the first NAS session or the identifier of the first NAS session is used by the access network device to determine that a target network element of the first request message is the first network element, that is, to determine to send the first request message to the first network element. In other words, after receiving the second message, the access network device may determine, based on the radio bearer corresponding to the first NAS session and/or the identifier of the first NAS session, to send the first request message to the first network element.

According to this solution, when sending the message to the target network element via the NAS session, the terminal device may send the message over the radio bearer corresponding to the NAS session, and/or send the message together with the identifier of the NAS session, so that the access network device responsible for forwarding the message can determine the target network element corresponding to the message, to transmit the message via the NAS session.

In a possible implementation, that the terminal device sends the first NAS message to the second network element via the second NAS session includes: The terminal device sends a first message to the access network device, where the first message includes the first NAS message. Optionally, the first message may be an RRC message. In this implementation, the first message is sent over a radio bearer corresponding to the second NAS session, and/or the first message includes the identifier of the second NAS session. The radio bearer corresponding to the second NAS session or the identifier of the second NAS session is used by the access network device to determine that a target network element of the first NAS message is the second network element, that is, to determine to send the first NAS message to the second network element. In other words, after receiving the first message, the access network device may determine, based on the radio bearer corresponding to the second NAS session and/or the identifier of the second NAS session, to send the first NAS message to the second network element.

According to this solution, when sending the NAS message to the target network element via the NAS session, the terminal device may send the NAS message over the radio bearer corresponding to the NAS session, and/or send the NAS message together with the identifier of the NAS session, so that the access network device responsible for forwarding the message can determine the target network element corresponding to the message, to transmit the message via the NAS session.

In a possible implementation, the first request message includes first information, and the first information is used to select the second network element from a network element that provides the service.

According to this solution, the second network element suitable for establishing the second NAS session may be selected, based on the first information, from the network element that provides the service.

In a possible implementation, the method further includes: The terminal device receives second information from the access network device, where the second information is used to configure one or more radio bearers corresponding to the second NAS session. That the terminal device sends the first NAS message to the second network element via the second NAS session includes: The terminal device sends the first NAS message to the second network element over the radio bearer corresponding to the second NAS session.

According to this solution, the corresponding radio bearer may be configured for the second NAS session, and the terminal device may send the NAS message over the radio bearer corresponding to the second NAS session. Correspondingly, the access network device may determine, over the radio bearer for receiving the NAS message, the NAS session corresponding to the NAS message.

In a possible implementation, the second NAS session includes one or more quality of service (quality of service, QoS) flows, and that the terminal device sends the first NAS message to the second network element via the second NAS session includes: The terminal device sends the first NAS message to the second network element over a radio bearer corresponding to the first QoS flow. The first NAS message corresponds to the first QoS flow, and the one or more QoS flows include the first QoS flow.

According to this solution, corresponding radio bearers may be configured for the QoS flows included in the second NAS session, so that split transmission of NAS messages transmitted via the second NAS session can be performed over different radio bearers based on the corresponding QoS flows, to prevent message blocking that may be caused when all the NAS messages transmitted via the second NAS session are transmitted through a same channel.

In a possible implementation, the method further includes: The terminal device receives a mapping rule, where the mapping rule includes a correspondence between the first NAS message and the first QoS flow. The terminal device receives third information from the access network device, where the third information is used to configure the radio bearer corresponding to the first QoS flow.

According to this solution, the terminal device may determine, according to the mapping rule, the QoS flow corresponding to the to-be-sent NAS message, and further determine, based on the third information, the radio bearer corresponding to the QoS flow.

According to a second aspect, a communication method is provided. The method may be performed by a first network element; may be performed by a component (for example, a processor, a chip, or a chip system) of the first network element; or may be implemented by using a logic module or software that can implement all or some functions of the first network element. An example in which the first network element is an execution body of the method is used below for description. The method includes: The first network element receives a first request message from a terminal device via a first NAS session, where the first NAS session is a NAS session established between the terminal device and the first network element, and is used for transmission of a NAS message between the terminal device and the first network element. The first network element triggers establishment of a second NAS session, where the second NAS session is used for transmission of a NAS message between the terminal device and a second network element.

For the first request message, in a possible case, the first request message is used to request a service. In another possible case, the first request message is used to request a service, and is further used to request establishment of the NAS session between the terminal device and the second network element. In another possible case, the first request message is used to request establishment of the NAS session between the terminal device and the second network element.

If the first request message is used to request the service, the service is provided by the second network element. If the first request message is used to request establishment of the NAS session between the terminal device and the second network element (the foregoing case in which the first request message is used to request the service, and is further used to request establishment of the NAS session between the terminal device and the second network element; or the foregoing case in which the first request message is used to request establishment of the NAS session between the terminal device and the second network element), the second NAS session is a NAS session that is actually established between the terminal device and the second network element in response to the request of the first request message.

According to the communication method provided in this embodiment of this application, the terminal device and the second network element may establish the second NAS session when the first NAS session has been established between the terminal device and the first network element, so that the NAS message between the terminal device and the second network element can be directly transmitted via the second NAS session. In comparison with a solution in which the first network element forwards a NAS message, this improves NAS message transmission efficiency. In addition, in this solution, the NAS message transmitted between the second network element and the terminal device does not depend on the first network element, so that a principle of function decoupling between network elements can be matched, flexibility of a network architecture can be improved, and NAS message transmission security can be improved.

In a possible implementation, the method further includes: The first network element sends an identifier of the second NAS session to the second network element. Optionally, the identifier of the second NAS session may be allocated by the terminal device to the second NAS session, or may be allocated by the first network element to the second NAS session.

In a possible implementation, the method further includes: The first network element determines, based on subscription information of the terminal device, whether establishment of the NAS session between the terminal device and the second network element is allowed. That the first network element triggers establishment of the second NAS session includes: When the subscription information of the terminal device indicates that establishment of the NAS session between the terminal device and the second network element is allowed, the first network element triggers establishment of the second NAS session.

According to this solution, the first network element may determine, based on the subscription information of the terminal device, whether establishment of the second NAS session is allowed. In other words, the first network element may authorize establishment of the second NAS session based on the subscription information of the terminal device, to prevent an unauthorized NAS session from causing insecure impact on a system.

Optionally, that the subscription information of the terminal device indicates that establishment of the NAS session between the terminal device and the second network element is allowed includes: The subscription information of the terminal device indicates that establishment of the NAS session between the terminal device and the second network element is allowed for the service requested via the first request message.

According to this solution, the first network element may determine, based on the subscription information of the terminal device, whether to establish the second NAS session for the service requested via the first request message.

In a possible implementation, the method further includes: The first network element sends a fifth request message to the second network element, where the fifth request message is used to request the service. The first network element receives fourth information from the second network element, where the fourth information indicates to establish the second NAS session. That the first network element triggers establishment of the second NAS session includes: The first network element triggers establishment of the second NAS session based on the fourth information.

According to this solution, the second network element may determine to establish the second NAS session, and the first network element may trigger establishment of the second NAS session as indicated by the second network element.

In a possible implementation, the method further includes: The first network element selects, based on the first information, the second network element from a network element that provides the service, where the first request message includes the first information, or the subscription information of the terminal device includes the first information.

According to this solution, the first network element may select, based on the first information, a network element suitable for establishing the second NAS session with the terminal device as the second network element from the network element that can provide the service.

In a possible implementation, that the first network element triggers establishment of the second NAS session includes: The first network element sends a second request message to the second network element, where the second request message is used to request establishment of the second NAS session.

According to this solution, the first network element may trigger establishment of the second NAS session by sending the request message to the second network element.

In a possible implementation, the second request message includes a root key of the second NAS session, the root key of the second NAS session is used to generate a key of the second NAS session, and the key of the second NAS session includes at least one of the following keys: a key used to encrypt a NAS message transmitted via the second NAS session or a key used to perform integrity protection on a NAS message transmitted via the second NAS session.

According to this solution, security protection may be performed, by using the key of the second NAS session, on the NAS message transmitted via the second NAS session, to prevent the NAS message transmitted via the second NAS session from being tampered with.

In a possible implementation, the method further includes: The first network element generates the root key of the second NAS session based on a root key of the first NAS session and the identifier of the second NAS session.

This solution provides a method for generating the root key of the second NAS session.

In a possible implementation, the second request message further includes security capability information of the terminal device, the security capability information indicates one or more encryption algorithms supported by the terminal device and/or one or more integrity protection algorithms supported by the terminal device, the security capability information is used to determine a security algorithm corresponding to the second NAS session, and the security algorithm includes at least one of the following algorithms: an encryption algorithm used to encrypt the NAS message transmitted via the second NAS session, or an integrity protection algorithm used to perform integrity protection on the NAS message transmitted via the second NAS session.

According to this solution, the second network element may obtain the security capability information of the terminal device via the second request message, and determine, based on the security capability information of the terminal device, the security algorithm corresponding to the second NAS session, to protect the NAS message transmitted via the second NAS session.

In a possible implementation, the method further includes: The first network element receives first indication information from the second network element, where the first indication information indicates the terminal device to activate a security mode for the second NAS session. The security mode includes one or more of the following: performing encryption on the NAS message transmitted via the second NAS session, or performing integrity protection on the NAS message transmitted via the second NAS session. The first network element sends the first indication information to the terminal device.

According to this solution, the first indication information may indicate the terminal device to enable the security mode for the second NAS session, to protect the NAS message transmitted via the second NAS session, and prevent the NAS message transmitted via the second NAS session from being tampered with.

In a possible implementation, the method further includes: The first network element sends a third request message to an access network device, where the third request message is used to request establishment of the second NAS session, and the third request message includes the identifier of the second NAS session.

According to this solution, a direct channel may be established between the access network device and the second network element, to establish the second NAS session.

In a possible implementation, the method further includes: The first network element receives second indication information from the second network element, where the second indication information indicates to establish the second NAS session. That the first network element sends the third request message to the access network device includes: The first network element sends the third request message to the access network device based on the second indication information.

According to this solution, the first network element may request, as indicated by the second network element, the access network device to establish the second NAS session.

In a possible implementation, the method further includes: The first network element sends the identifier of the second NAS session to the terminal device.

In a possible implementation, the second request message includes address information of the access network device and a first identifier, the address information of the access network device is used to send a message to the access network device, and the first identifier indicates a context of the terminal device in the access network device.

According to this solution, the address information of the access network device and the first identifier may be sent to the second network element, so that the second network element can subsequently send a NAS message via the second NAS session based on the address information of the access network device and the first identifier.

In a possible implementation, before that the first network element sends the second request message to the second network element, the method further includes: The first network element receives the first identifier from the access network device.

According to this solution, the identifier of the context of the terminal device in the access network device may be allocated by the access network device.

According to a third aspect, a communication method is provided. The method may be performed by a second network element; may be performed by a component (for example, a processor, a chip, or a chip system) of the second network element; or may be implemented by using a logic module or software that can implement all or some functions of the second network element. An example in which the second network element is an execution body of the method is used below for description. The method includes: The second network element receives a second request message from a first network element, where the second request message is used to request establishment of a second NAS session, and the second NAS session is used for transmission of a NAS message between a terminal device and the second network element. In addition, there is a first NAS session used for transmission of a NAS message between the first network element and the terminal device. Then, the second network element sends a first response message for the second request message to the first network element.

According to the communication method provided in this embodiment of this application, the terminal device and the second network element may establish the second NAS session when the first NAS session has been established between the terminal device and the first network element, so that the NAS message between the terminal device and the second network element can be directly transmitted via the second NAS session. In comparison with a solution in which the first network element forwards a NAS message, this improves NAS message transmission efficiency. In addition, in this solution, the NAS message transmitted between the second network element and the terminal device does not depend on the first network element, so that a principle of function decoupling between network elements can be matched, flexibility of a network architecture can be improved, and NAS message transmission security can be improved.

In a possible implementation, the first response message includes a third request message, the third request message is used to request an access network device to establish the second NAS session, and the third request message includes address information of the second network element and an identifier of the second NAS session.

According to this solution, the second network element may request, through the first network element, the access network device to establish the second NAS session.

In a possible implementation, the first response message includes second indication information, the second indication information indicates the access network device to establish the second NAS session, the second indication information is used to trigger the first network element to send the third request message to the access network device, and the third request message is used to request establishment of the second NAS session.

According to this solution, the second network element may indicate the first network element to request the access network device to establish the second NAS session. The first network element may request, as indicated by the second network element, the access network device to establish the second NAS session.

In a possible implementation, the method further includes: The second network element sends a third request message to an access network device, where the third request message is used to request the access network device to establish the second NAS session, and the third request message includes address information of the second network element and the identifier of the second NAS session.

According to this solution, the second network element may directly request the access network device to establish the second NAS session.

In a possible implementation, the second request message includes address information of the access network device and a first identifier, and the first identifier indicates a context of the terminal device in the access network device. That the second network element sends the third request message to the access network device includes: The second network element sends the third request message to the access network device based on the address information of the access network device and the first identifier.

In a possible implementation, the method further includes: The second network element sends a second response message to the terminal device using the third request message, where the second response message indicates that the second NAS session is successfully established, and the second response message includes the identifier of the second NAS session.

According to this solution, the second network element may notify, via the second response message, the terminal device that the second NAS session is successfully established.

In a possible implementation, before that the second network element receives the second request message from the first network element, the method further includes: The second network element receives a fifth request message from the first network element, where the fifth request message is used to request a service, and the service is provided by the second network element. The second network element sends fourth information to the first network element based on the fifth request message, where the fourth information indicates to establish the second NAS session.

According to this solution, the second network element may actively determine, based on the service requested by the terminal device, to establish the second NAS session, and indicate the first network element to establish the second NAS session, to trigger establishment of the second NAS session.

In a possible implementation, the method further includes: The second network element receives a third response message from the access network device, where the third response message includes the address information of the access network device and a second identifier, and the second identifier indicates a context of the second NAS session in the access network device.

According to this solution, the second network element may obtain the address information of the access network device and the second identifier, so that when subsequently sending a NAS message via the second NAS session, the second network element may directly send the NAS message to the terminal device through the access network device based on the address information of the access network device and the second identifier.

In a possible implementation, the first response message includes the identifier of the second NAS session.

In a possible implementation, the method further includes: The second network element sends first indication information to the first network element, where the first indication information indicates the terminal device to activate a security mode for the second NAS session, and the security mode includes one or more of the following: performing encryption on a NAS message transmitted via the second NAS session, or performing integrity protection on a NAS message transmitted via the second NAS session.

Alternatively, the method further includes: The second network element sends first indication information to the terminal device via the second NAS session, where the first indication information indicates the terminal device to activate a security mode for the second NAS session; and the security mode includes one or more of the following: performing encryption on a NAS message transmitted via the second NAS session, or performing integrity protection on a NAS message transmitted via the second NAS session.

According to this solution, the first indication information may indicate the terminal device to enable the security mode for the second NAS session, to protect the NAS message transmitted via the second NAS session, and prevent the NAS message transmitted via the second NAS session from being tampered with.

In a possible implementation, the method further includes: The second network element obtains a key of the second NAS session, where the key of the second NAS session includes at least one of the following keys: a key used for the encryption or a key used for the integrity protection. The second network element performs at least one of the encryption or the integrity protection on the first indication information by using the key of the second NAS session. The second network element sends the first indication information to the terminal device.

According to this solution, the second network element may perform corresponding processing on the first indication information by using the key of the second NAS session, to perform verification on whether the terminal device that receives the first indication information has the same key of the second NAS session.

In a possible implementation, that the second network element obtains the key of the second NAS session includes: The second network element generates the key of the second NAS session based on a root key of the second NAS session, where the second request message includes the root key of the second NAS session, or subscription information of the terminal device includes the root key of the second NAS session.

This solution provides a plurality of manners of obtaining the key of the second NAS session.

In a possible implementation, the method further includes: The second network element obtains security capability information of the terminal device, where the security capability information indicates one or more encryption algorithms supported by the terminal device and/or one or more integrity protection algorithms supported by the terminal device. The second network element determines, based on the security capability information of the terminal device, a security algorithm corresponding to the second NAS session, where the security algorithm includes one or more of the following algorithms: an encryption algorithm used to encrypt the NAS message transmitted via the second NAS session, or an integrity protection algorithm used to perform integrity protection on the NAS message transmitted via the second NAS session.

According to this solution, the second network element may determine, based on the algorithm supported by the terminal device, an algorithm suitable for performing security protection on the NAS message transmitted via the second NAS session.

In a possible implementation, the second request message includes the security capability information, and/or the subscription information of the terminal device includes the security capability information.

In a possible implementation, the second NAS session includes one or more QoS flows, and the method further includes: The second network element sends a mapping rule to the terminal device, where the mapping rule includes a correspondence between a NAS message transmitted via the second NAS session and each of the one or more QoS flows.

According to this solution, the second network element may send the mapping rule to the terminal device, so that when sending a NAS message via the second NAS session, the terminal device may determine a QoS flow corresponding to the NAS message.

In a possible implementation, the second NAS session includes the one or more QoS flows, and the method further includes: The second network element sends a fourth request message to the access network device, where the fourth request message is used to request to configure a radio bearer corresponding to each of the one or more QoS flows.

According to this solution, corresponding radio bearers may be configured for the QoS flows included in the second NAS session, so that split transmission of NAS messages transmitted via the second NAS session can be performed over different radio bearers based on the corresponding QoS flows, to prevent message blocking that may be caused when all the NAS messages transmitted via the second NAS session are transmitted through a same channel.

In a possible implementation, the method further includes: The second network element sends, via the second NAS session, a second NAS message and identification information of a second QoS flow corresponding to the second NAS message, where the identification information of the second QoS flow is used by the access network device to determine and send the second NAS message to the terminal device via the second NAS session.

According to this solution, the second network element may indicate, to the access network device, the identification information of the QoS flow corresponding to the NAS message, so that the access network device can determine, based on the identification information of the QoS flow, that the QoS flow corresponding to the NAS message is one of the QoS flows included in the second NAS session, and send the second NAS message to the terminal device via the second NAS session.

According to a fourth aspect, a communication method is provided. The method may be performed by an access network device; may be performed by a component (for example, a processor, a chip, or a chip system) of the access network device; or may be implemented by using a logical module or software that can implement all or some functions of the access network device. An example in which the access network device is an execution body of the method is used below for description. The method includes: The access network device receives a third NAS message from a terminal device. The access network device determines that the third NAS message belongs to a third NAS session, where the third NAS session is a NAS session between the terminal device and a third network element. In other words, the access network device determines that a target network element of the third NAS message is the third network element. Therefore, the access network device sends the third NAS message to the third network element.

According to the communication method provided in this embodiment of this application, after receiving NAS message from the terminal device, the access network device can distinguish the NAS session corresponding to the received NAS message, so that the NAS message can be transmitted to the correct target network element. Therefore, the NAS message is directly transmitted via the NAS session, to improve NAS message transmission efficiency.

In a possible implementation, that the access network device receives the third NAS message from the terminal device includes: The access network device receives the third NAS message and an identifier of the third NAS session from the terminal device. In this implementation, that the access network device determines that the third NAS message belongs to the third NAS session includes: The access network device determines, based on the identifier of the third NAS session, that the third NAS message belongs to the third NAS session.

Optionally, in this implementation, the access network device may determine the target network element of the third NAS message based on the identifier of the third NAS session and a first correspondence. The first correspondence indicates that the identifier of the third NAS session corresponds to the target network element of the third NAS message. For example, the first correspondence may include a correspondence between the identifier of the third NAS session and information about the target network element of the third NAS message (information such as identification information and address information of the third network element).

According to this solution, a manner in which the access network device determines the target network element of the third NAS message is provided: determining the target network element of the third NAS message based on the identifier of the third NAS session.

In a possible implementation, that the access network device determines that the third NAS message belongs to the third NAS session includes: The access network device determines, based on a radio bearer used for transmission of the third NAS message, that the third NAS message belongs to the third NAS session. For example, before receiving the third NAS message, the access network device may configure a corresponding radio bearer for the third NAS session, so that after receiving the third NAS message, the access network device may determine, based on that the radio bearer used for transmission of the third NAS message is the radio bearer corresponding to the third NAS session, that the third NAS message belongs to the third NAS session.

Optionally, in this implementation, the access network device may determine the target network element of the third NAS message based on the radio bearer used for transmission of the third NAS message and a second correspondence, where the second correspondence indicates that the radio bearer used for transmission of the third NAS message corresponds to the target network element of the third NAS message. For example, the second correspondence may include a correspondence between the radio bearer used for transmission of the third NAS message, an identifier of the third NAS session, and information about the target network element of the third NAS message (information such as identification information and address information of the third network element).

According to this solution, another manner in which the access network device determines the target network element of the third NAS message is provided: determining the target network element of the third NAS message based on the radio bearer used for transmission of the third NAS message.

In a possible implementation, the method further includes: The access network device receives a fourth NAS message from the third network element. The access network device determines that the fourth NAS message belongs to the third NAS session. The access network device sends the fourth NAS message and the identifier of the third NAS session to the terminal device, and/or the access network device sends the fourth NAS message to the terminal device over the radio bearer corresponding to the third NAS session.

According to this solution, when forwarding the NAS message that is to the terminal device, the access network device may enable, by using the identifier of the NAS session and/or the radio bearer corresponding to the NAS session, the terminal device to determine the NAS session corresponding to the NAS message.

Optionally, in this implementation, that the access network device receives the fourth NAS message from the third network element may include: The access network device receives the fourth NAS message and the identifier of the third NAS session from the third network element. Based on this, that the access network device determines that the fourth NAS message belongs to the third NAS session includes: The access network device determines, based on the identifier of the third NAS session, that the fourth NAS message belongs to the third NAS session.

Optionally, in this implementation, that the access network device receives the fourth NAS message from the third network element may include: The access network device receives the fourth NAS message and a third identifier from the third network element, where the third identifier indicates a context of the third NAS session in the access network device. Based on this, that the access network device determines that the fourth NAS message belongs to the third NAS session includes: The access network device determines, based on the third identifier, that the fourth NAS message belongs to the third NAS session.

According to the communication method provided in this embodiment of this application, after receiving a NAS message from a core network element, the access network device may further determine a NAS session corresponding to the NAS message. In a possible manner, the core network element sends an identifier of the NAS session together with the NAS message to the access network device, so that the access network device can directly determine, based on the identifier of the NAS session, the NAS session corresponding to the NAS message. In another possible manner, the core network element sends an identifier of a context of the NAS session in the access network device together with the NAS message to the access network device, so that the access network device can determine, based on the context of the NAS session in the access network device, the NAS session corresponding to the NAS message.

In a possible implementation, the method further includes: The access network device receives the fourth NAS message and the identifier of the third NAS session from the third network element, and the access network device sends the fourth NAS message and the identifier of the third NAS session to the terminal device.

According to this solution, the access network device may directly forward the fourth NAS message and the identifier of the third NAS session from the third network element to the terminal device.

Optionally, in this implementation, the access network device may further determine, based on the identifier of the third NAS session, that the fourth NAS message belongs to the third NAS session.

In a possible implementation, the method further includes: The access network device receives a third request message, where the third request message is used to request establishment of the third NAS session, and the third NAS session is used for transmission of a NAS message between the terminal device and the third network element. Then, the access network device sends a third response message to the third network element, where the third response message includes address information of the access network device and the third identifier, and the third identifier indicates the context of the third NAS session in the access network device. Optionally, the third request message may include the identifier of the third NAS session and address information of the third network element. In this case, the access network device may send the third response message to the third network element based on the address information of the third network element.

According to this solution, to establish the third NAS session, the access network device may allocate a context identifier (namely, the third identifier) to the third NAS session, and send the address information of the access network device and the context identifier of the third NAS session to the third network element, so that a direct channel between the access network device and the third network element can be established.

In a possible implementation, the method further includes: The access network device receives a fourth request message from the third network element, where the fourth request message is used to request to configure a radio bearer corresponding to each of one or more QoS flows included in the third NAS session. The access network device configures, based on the fourth request message, the radio bearer corresponding to each QoS flow.

According to this solution, the access network device may configure corresponding radio bearers for the QoS flows included in the third NAS session, so that split transmission of NAS messages transmitted via the third NAS session can be performed over different radio bearers based on the corresponding QoS flows, to prevent message blocking that may be caused when all the NAS messages transmitted via the third NAS session are transmitted through a same channel.

In a possible implementation, the method further includes: The access network device receives, from the third network element, the fourth NAS message and identification information of a QoS flow corresponding to the fourth NAS message, where the one or more QoS flows included in the third NAS session include the QoS flow corresponding to the fourth NAS message. Further, the access network device determines, based on the identification information of the QoS flow corresponding to the fourth NAS message, a radio bearer corresponding to the fourth NAS message, and sends the fourth NAS message to the terminal device over the radio bearer.

According to this solution, if the access network device determines that a QoS flow corresponding to a received downlink NAS message is one of the QoS flows included in the NAS session, the access network device may further send, based on a configured correspondence between a QoS flow and a radio bearer, the downlink NAS message to the terminal device over a radio bearer corresponding to the QoS flow, so that the terminal device can determine, based on the radio bearer for receiving the downlink NAS message, the QoS flow corresponding to the downlink NAS message.

According to a fifth aspect, a communication method is provided. The method may be performed by an access network device; may be performed by a component (for example, a processor, a chip, or a chip system) of the access network device; or may be implemented by using a logical module or software that can implement all or some functions of the access network device. An example in which the access network device is an execution body of the method is used below for description. The method includes: The access network device receives a fourth request message from a second network element, where the fourth request message is used to request to configure a radio bearer corresponding to each of one or more QoS flows included in a second NAS session. The second NAS session is used for transmission of a NAS message between a terminal device and the second network element. Further, the access network device configures, based on the fourth request message, the corresponding radio bearer for each QoS flow. Then, the access network device sends third information to the terminal device, where the third information is used to configure the radio bearer corresponding to each QoS flow.

According to this solution, the access network device may configure corresponding radio bearers for the QoS flows included in the second NAS session, so that split transmission of NAS messages transmitted via the second NAS session can be performed over different radio bearers based on the corresponding QoS flows, to prevent message blocking that may be caused when all the NAS messages transmitted via the second NAS session are transmitted through a same channel.

In a possible implementation, the fourth request message further includes a mapping rule, and the mapping rule includes a correspondence between a NAS message transmitted via the second NAS session and each QoS flow. In this implementation, the method further includes: The access network device sends the mapping rule to the terminal device.

According to this solution, the terminal device may determine, according to the mapping rule, the QoS flow corresponding to the to-be-sent NAS message, and further determine, based on the third information, the radio bearer corresponding to the QoS flow.

In a possible implementation, the method further includes: The access network device receives a first NAS message from the terminal device. Then, the access network device determines, based on a radio bearer used for transmission of the first NAS message, that the first NAS message corresponds to a first QoS flow, and the second NAS session includes the first QoS flow, so as to send the first NAS message and identification information of the first QoS flow to the second network element.

According to this solution, the access network device may determine, based on the radio bearer for receiving the NAS message, the QoS flow corresponding to the NAS message and determine the target network element of the NAS message, and when sending the NAS message to the target network element of the NAS message, the terminal device may send the identification information of the QoS flow together, to indicate the QoS flow corresponding to the NAS message.

In a possible implementation, the method further includes: The access network device receives, from the terminal device, the first NAS message and the identification information of the first QoS flow corresponding to the first NAS message, where the second NAS session includes the first QoS flow. The access network device sends the first NAS message and the identification information of the first QoS flow to the second network element.

According to this solution, if the terminal device sends the identification information of the QoS flow corresponding to the NAS message when sending the NAS message, the access network device may directly determine, based on the identification information of the QoS flow corresponding to the NAS message, the session corresponding to the NAS message and the target network element of the NAS message, to send the NAS message and the identification information of the QoS flow corresponding to the NAS message to the target network element of the NAS message.

In a possible implementation, the method further includes: The access network device receives, from the second network element, a second NAS message and identification information of a second QoS flow corresponding to the second NAS message. The access network device determines, based on the identification information of the second QoS flow, a radio bearer corresponding to the second QoS flow. The access network device sends the second NAS message to the terminal device over the radio bearer corresponding to the second QoS flow.

According to this solution, after receiving a downlink NAS message, the access network device may send the NAS message to the terminal device over a radio bearer corresponding to the downlink NAS message, so that the terminal device can determine, based on the radio bearer for receiving the NAS message, the QoS flow corresponding to the NAS message.

According to a sixth aspect, a communication apparatus is provided, to implement the foregoing methods. The communication apparatus includes a corresponding module, unit, or means (means) for implementing the foregoing methods. The module, unit, or means may be implemented by using hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement the sending function and/or the receiving function in the first aspect, the second aspect, the third aspect, the fourth aspect, the fifth aspect, or any possible implementation thereof. The transceiver module may include a transceiver circuit, a transceiver machine, a transceiver, or a communication interface. The processing module may be configured to implement the processing function in the first aspect, the second aspect, the third aspect, the fourth aspect, the fifth aspect, or any possible implementation thereof.

In some possible designs, the transceiver module includes a sending module and a receiving module, which are respectively configured to implement the sending function and the receiving function in the first aspect, the second aspect, the third aspect, the fourth aspect, the fifth aspect, or any possible implementation thereof.

According to a seventh aspect, a communication apparatus is provided, including a processor and a communication interface. The communication interface is configured to communicate with a module other than the communication apparatus. The processor is configured to execute a computer program or instructions, to cause the communication apparatus to perform the method according to any one of the foregoing aspects.

According to an eighth aspect, a communication apparatus is provided. The communication apparatus includes at least one processor. The processor is configured to execute a computer program or instructions stored in a memory, to cause the communication apparatus to perform the method according to any one of the foregoing aspects. In a possible implementation, the memory may be coupled to the processor, or may be independent of the processor. In a possible implementation, the communication apparatus further includes the memory. Optionally, the memory is integrated with the processor.

In the fifth aspect to the eighth aspect, the communication apparatus may be the terminal device in any one of the first aspect or the implementations of the first aspect, an apparatus including the terminal device, or an apparatus, for example, a chip, included in the terminal device. Alternatively, the communication apparatus may be the first network element in any one of the second aspect or the implementations of the second aspect, an apparatus including the first network element, or an apparatus, for example, a chip, included in the first network element. Alternatively, the communication apparatus may be the second network element in any one of the third aspect or the implementations of the third aspect, an apparatus including the second network element, or an apparatus, for example, a chip, included in the second network element. Alternatively, the communication apparatus may be the access network device in any one of the fourth aspect or the implementations of the fourth aspect, or any one of the fifth aspect or the implementations of the fifth aspect, an apparatus including the access network device, or an apparatus, for example, a chip or a chip system, included in the access network device.

According to a ninth aspect, a computer-readable storage medium is provided. The computer-readable storage medium stores a computer program or instructions. When the computer program or the instructions is/are run on a communication apparatus, the communication apparatus is caused to perform the method according to any one of the foregoing aspects or the implementations thereof.

According to a tenth aspect, a computer program product including instructions is provided. When the computer program product is run on a communication apparatus, the communication apparatus is caused to perform the method according to any one of the foregoing aspects or the implementations thereof.

According to an eleventh aspect, a communication apparatus (for example, the communication apparatus may be a chip or a chip system) is provided. The communication apparatus includes a processor, configured to implement a function in any one of the foregoing aspects or the implementations thereof.

In some possible designs, the communication apparatus includes a memory, and the memory is configured to store necessary program instructions and data.

In some possible designs, when the apparatus is a chip system, the apparatus may include a chip, or may include a chip and another discrete device.

It may be understood that when the communication apparatus provided in any one of the sixth aspect to the eighth aspect is a chip, the foregoing sending action/function may be understood as outputting, and the foregoing receiving action/function may be understood as inputting.

For technical effects brought by any implementation in the sixth aspect to the eleventh aspect, refer to the technical effects brought by corresponding implementations in the first aspect to the fifth aspect. Details are not described herein again.

It should be noted that various possible implementations of any one of the foregoing aspects may be combined, provided that there is no conflict between the solutions.

According to a twelfth aspect, a communication system is provided. The communication system includes a first network element and a second network element. The first network element is configured to perform the method according to any one of the second aspect or the implementations of the second aspect. The second network element is configured to perform the method according to any one of the third aspect or the implementations of the third aspect.

In some possible designs, the communication system further includes a terminal device, and the terminal device is further configured to perform the method according to any one of the first aspect or the implementations of the first aspect.

In some possible designs, the communication system further includes an access network device, and the access network device is configured to perform the method according to any one of the fourth aspect or the implementations of the fourth aspect, or the method according to any one of the fifth aspect or the implementations of the fifth aspect.

### BRIEF DESCRIPTION OF DRAWINGS

FIG. 1 is a diagram of a current NAS message transmission mechanism;
FIG. 2 is a diagram of an architecture of a communication system to which an embodiment of this application is applicable;
FIG. 3 is an interaction diagram of a communication method according to an embodiment of this application;
FIG. 4 is a diagram of an example procedure of a communication method according to an embodiment of this application;
FIG. 5 is an interaction diagram of another communication method according to an embodiment of this application;
FIG. 6 is an interaction diagram of still another communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

For ease of understanding of the technical solutions in embodiments of this application, the following first briefly describes technologies related to this application.

### 1. NAS message transmission mechanism in 5G:

5G introduces a service-oriented architecture on a control plane of a core network. Communication between network functions, for example, network elements such as an AMF network element and a session management function (session management function, SMF) network element, on the service-oriented control plane is based on service-oriented interfaces. Based on the service-oriented interfaces, all the network elements on the control plane of the core network can directly communicate with each other. However, an interface used between a terminal device or an access network (access network, AN) device and the core network is still a non-service-oriented interface. The terminal device communicates with the AMF network element through an N1 interface, and the access network device communicates with the AMF network element through an N2 interface. Currently, both transmission of a NAS message between the terminal device and the core network element and transmission of a message (which may be referred to as an N2 message) between the access network device and the core network element need to be performed through the AMF network element.

There are different types of NAS messages. A NAS message used for mobility management (mobility management, MM) between the terminal device and the AMF network element may be referred to as a NAS-MM (NAS for mobility management) message. A NAS message used for session management (session management, SM) between the terminal device and the SMF network element may be referred to as a NAS-SM (NAS for session management) message. A short message (short message, SMS) is transferred between the terminal device and a short message service function (short message service function, SMSF) network element via a NAS message. Policy (policy) information and the like of the terminal device are transferred between the terminal device and a policy control function (policy control function, PCF) network element via a NAS message.

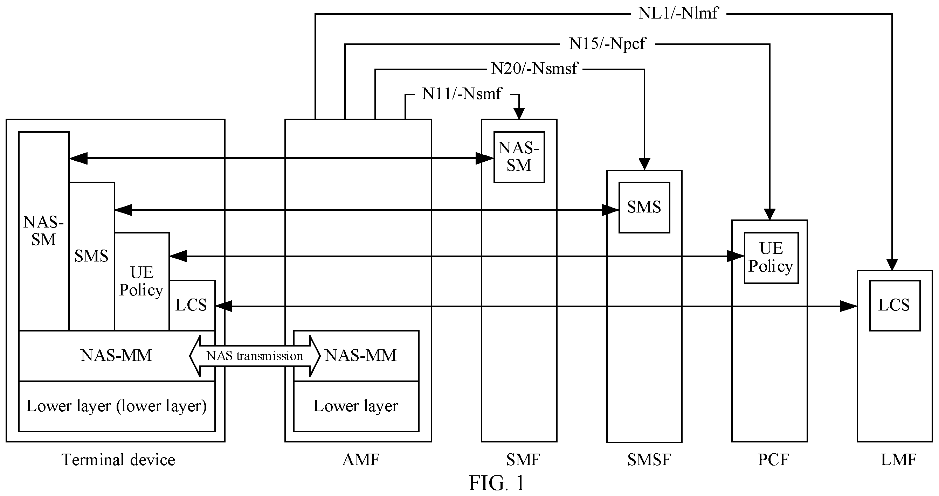

For example, a current NAS message transmission mechanism is shown in FIG. 1. A NAS message is transmitted between a terminal device and an AMF network element according to the NAS protocol. The NAS message sent by the terminal device to the AMF network element may include a message (for example, a NAS-MM message) sent to the AMF network element, and may further include messages whose target network elements are other network elements, for example, a NAS-SM message sent to an SMF network element, an SMS sent to an SMSF network element, policy related information of the terminal device sent to a PCF network element, and location service (location service, LCS) related information sent to a location management function (location management function, LMF). The terminal device transmits the NAS message to the AMF network element. After receiving the NAS message, the AMF network element forwards the information that is included in the NAS message and that needs to be sent to the other network elements to the corresponding network elements through interfaces between the AMF network element and the corresponding network elements. For example, the AMF network element sends the NAS-SM message in the NAS message to the SMF network element through an N11/Nsmf interface. The AMF network element sends the SMS in the NAS message to the SMSF network element through an N20/Nsmf interface. The AMF network element sends, to the PCF network element through an N15/Npcf interface, the policy related information of the terminal device in the NAS message. The AMF network element sends the LCS related information in the NAS message to the LMF network element through an NL1/Nlmf interface.

Similarly, an N2 message between an access network device and a core network element also needs to be forwarded by the AMF network element. For example, an N2 message between the access network device and the SMF network element, namely, an N2 SM (N2 session management) message, needs to be transmitted through the AMF network element.

However, this manner in which both the NAS message and the N2 message are transmitted through the AMF network element has the following problems. In this manner, other network elements in a core network depend on the AMF network element. This does not match a principle of function decoupling between network elements in a service-oriented architecture. For example, when an N2 message type and/or a NAS message type are/is newly added, the AMF network element further needs to be correspondingly enhanced in this manner. In addition, the AMF network element is usually deployed at a high location. When a target core network element (for example, the SMF/LMF network element) of an N2 message/a NAS message is deployed at an edge, the AMF network element forwards the N2/NAS message. In this case, a message detour occurs, and requirements in some low-latency scenarios cannot be met. Moreover, in some scenarios, there is a requirement that a message does not go out of a campus. When the AMF network element is deployed in an operator network, and the access network device and the network elements such as the SMF/LMF network element are deployed in the campus, if a message is forwarded by the AMF network element, the requirement that a message does not go out of a campus cannot be met. This may cause security risks.

Based on the foregoing problems, embodiments of this application provide a communication method, an apparatus, and a system, to improve NAS message transmission efficiency, and further improve flexibility of a network architecture and NAS message transmission security.

The following describes the technical solutions in embodiments of this application with reference to the accompanying drawings in embodiments of this application. In descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more, unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In embodiments of this application, "indication" may include a direct indication and an indirect indication, or may include an explicit indication and an implicit indication. Information indicated by a piece of information (for example, the following first indication information or second indication information) is referred to as to-be-indicated information. During specific implementation process, the to-be-indicated information is indicated in a plurality of manners, for example, but not limited to, the to-be-indicated information may be directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. During specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into a plurality of pieces of sub-information for separate sending. In addition, sending periods and/or sending occasions of these pieces of sub-information may be the same or may be different. A specific sending method is not limited in embodiments of this application. The sending periods and/or the sending occasions of these pieces of sub-information may be predefined, for example, predefined according to a protocol, or may be configured by a transmit-end device by sending configuration information to a receive-end device.

In embodiments of this application, "predefined", "predefinition", "preconfigured", or "preconfiguration" may be implemented by pre-storing corresponding code or a corresponding table in a device, or may be implemented in another manner for indicating related information, for example, may be burnt into the device before delivery of the device. A specific implementation is not limited in embodiments of this application. "Storing" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, the descriptions "when...", "in a case in which...", "if", "assuming", and the like all mean that a device performs corresponding processing in an objective case, but are not intended to limit time. The descriptions do not necessarily mean that the device performs a determining action during implementation, and do not mean any other limitation.

The technical solutions provided in this application can be applied to various communication systems. The communication system may be a 3rd generation partnership project (3rd generation partnership project, 3GPP) communication system, for example, a 4th generation (4th generation, 4G) mobile communication system, a long term evolution (long term evolution, LTE) system, a 5G mobile communication system and an evolved system thereof, a non-terrestrial network (non-terrestrial network, NTN), a multiple-input multiple-output (multiple-input multiple-output, MIMO) system, a vehicle to everything (vehicle to everything, V2X) system, an LTE and new radio (new radio, NR) hybrid networking system, a device-to-device (device-to-device, D2D) system, a machine to machine (machine to machine, M2M) communication system, an internet of things (internet of things, IoT), or a future-oriented evolved system. In addition, terms "system" and "network" may be interchangeable with each other.

It should be noted that the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

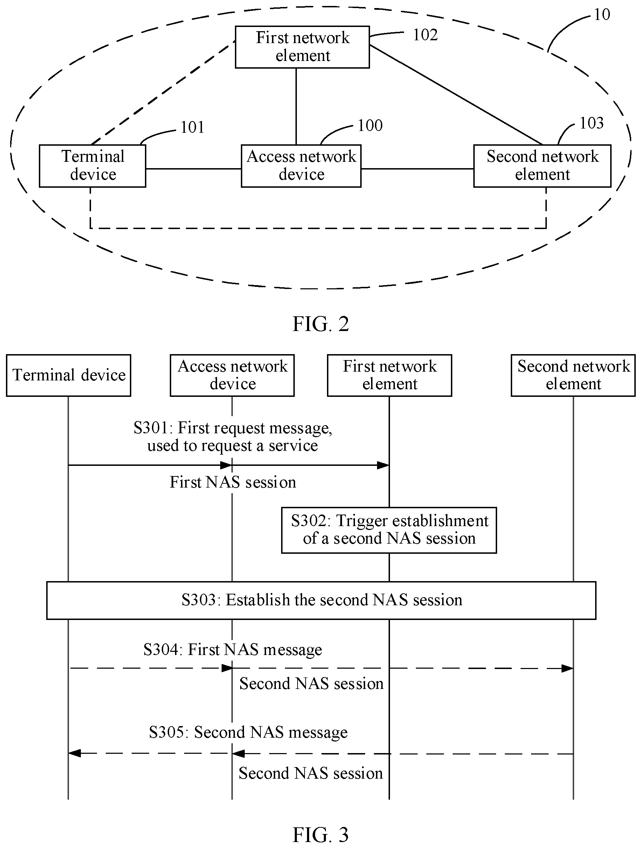

FIG. 2 is a diagram of an architecture of a possible non-limiting communication system to which an embodiment of this application is applicable. As shown in FIG. 2, the communication system 10 includes at least one access network device 100 and at least one terminal device 101 (in FIG. 2, one access network device and one terminal device are used as an example for illustration). The communication system 10 further includes core network elements: a first network element 102 and at least one second network element 103 (in FIG. 2, one second network element is used as an example for illustration).

The terminal device 101 may be connected to the access network device 100 in a wireless manner. The access network device 100 may be connected to the first network element 102 and the second network element 103 in a wired or wireless manner. The first network element 102 and the second network element 103 may be connected in a wired or wireless manner.

Optionally, the communication system 10 may further include another network element or device that is not shown, for example, a wireless relay device and/or a wireless backhaul device. This is not specifically limited in embodiments of this application.

In the communication system 10, a NAS session (which may be referred to as a first NAS session) may be established between the first network element and the terminal device. After the first NAS session is established between the first network element and the terminal device, the terminal device may further establish a NAS session (which may be referred to as a second NAS session) with the second network element according to the technical solutions provided in this application, so that a NAS message may be transmitted between the terminal device and the second network element via the second NAS session, and the NAS message does not need to be forwarded by the first network element.

Specific implementations and technical effects of the technical solutions provided in this application are described in detail in subsequent method embodiments. Details are not described herein.

The first network element or the second network element is not specifically limited in embodiments of this application. For example, the first network element may be an AMF network element in a 5G system, or may be a network element in a future communication system. If the first network element is the AMF network element, that the first network element and the terminal device establish the first NAS session is equivalent to that the terminal device communicates with the first network element through an N1 interface. The second network element may be any network element different from the first network element, for example, may be a network element such as an SMF network element, a PCF network element, an SMSF network element, or an LMF network element in the 5G system, or may be a network element in the future communication system, for example, an artificial intelligence (artificial intelligent, AI) agent network element. It may be understood that, if the second network element is not the AMF network element, that the terminal device and the second network element establish the second NAS session may be considered as that the terminal device and the second network element communicate with each other through a new interface.

The access network device in embodiments of this application is a RAN node (or device) through which the terminal device accesses a wireless network. In some network architectures, the access network device may be a base station (base station). Currently, examples of some access network devices are a next generation NodeB (next generation NodeB, gNB), a transmission reception point (transmission reception point, TRP), an evolved NodeB (evolved NodeB, eNodeB/eNB), a radio network controller (radio network controller, RNC), a NodeB (NodeB, NB), a base station controller (base station controller, BSC), a base transceiver station (base transceiver station, BTS), a home base station (a home evolved NodeB or a home NodeB, HNB), a baseband unit (baseband unit, BBU), or a wireless fidelity (wireless fidelity, Wi-Fi) access point (access point, AP).

In addition, in a network structure, a plurality of access network devices cooperate to assist a terminal device in implementing radio access, and different access network devices separately implement some functions of a base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an open access network (open RAN, O-RAN or ORAN), the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

All or some of functions of the access network device in this application may alternatively be implemented by using a software function running on hardware, or may be implemented by using a virtualization function instantiated on a platform (for example, a cloud platform). The access network device in this application may alternatively be a logical node, a logical module, or software that can implement all or some of the functions of the access network device.

The terminal device in embodiments of this application may also be referred to as a terminal (terminal), user equipment (user equipment, UE), a mobile station (mobile station, MS), a mobile terminal, or the like, and is a device having a wireless transceiver function. The terminal device can be widely used in various scenarios, for example, V2X, machine-type communication (machine-type communication, MTC), IoT, virtual reality (virtual reality, VR), augmented reality (augmented reality, AR), industrial control (industrial control), self driving (self driving), remote medical (remote medical surgery), smart grid (smart grid), smart home (smart home), smart office (smart office), smart wearable (smart bracelet), and smart city (smart city). Currently, some examples of the terminal device are a mobile phone, a tablet computer, a computer having a wireless transceiver function, a wearable device, a vehicle, an uncrewed aerial vehicle, a helicopter, an airplane, a ship, a robot, a robot arm, a smart home device, and the like. A device form of the terminal device is not limited in embodiments of this application.

The core network element in embodiments of this application is a device, for example, an AMF network element or an SMF network element, in a core network that provides service support for the terminal device. Core network elements are not listed one by one herein. For specific functions of these core network elements, refer to an existing protocol. Details are not described herein.

In embodiments of this application, the network element may also be referred to as an entity or a functional entity. For example, the first network element may also be referred to as a first entity or a first functional entity.

The following describes the communication method provided in embodiments of this application in detail with reference to FIG. 2.

It should be noted that names of messages between network elements, names of parameters in the messages, or the like in the following embodiments of this application are merely examples, and there may be other names during specific implementation. This is not specifically limited in embodiments of this application.

It may be understood that in embodiments of this application, each network element may perform some or all of steps in embodiments of this application. These steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

FIG. 3 shows a communication method according to an embodiment of this application. In FIG. 3, the method is illustrated by using an example in which a terminal device and a first network element are execution bodies of the interaction illustration. However, the execution bodies of the interaction illustration are not limited in this application. For example, the first network element in FIG. 3 may alternatively be a module, for example, a chip, a chip system, or a processor, used in the first network element; or may be a logical node, a logical module, or software that can implement all or some functions of the first network element. A second network element in FIG. 3 may alternatively be a module, for example, a chip, a chip system, or a processor, used in the second network element; or may be a logical node, a logical module, or software that can implement all or some functions of the second network element. The terminal device in FIG. 3 may alternatively be a module, for example, a chip, a chip system, or a processor, used in the terminal device; or may be a logical node, a logical module, or software that can implement all or some functions of the terminal device.

As shown in FIG. 3, the communication method includes steps S301 to S303.

S301: The terminal device sends a first request message to the first network element via a first NAS session, where the first request message is used to request a service. Correspondingly, the first network element receives the first request message. The service requested using the first request message is provided by the second network element, and the first NAS session is used for transmission of a NAS message between the terminal device and the first network element.

S302: The first network element triggers establishment of a second NAS session. The second NAS session is used for transmission of a NAS message between the terminal device and the second network element.

S303: The second network element and the terminal device establish the second NAS session.

It may be understood that the first NAS session is an example name of a NAS session established between the first network element and the terminal device in this embodiment of this application. Similarly, the second NAS session is an example name of a NAS session established between the second network element and the terminal device. During specific implementation, the second NAS session may alternatively have another name. This is not specifically limited in embodiments of this application. For example, the first NAS session may also be referred to as a NAS main session, and the second NAS session may also be referred to as a NAS sub-session.

According to the communication method provided in this embodiment of this application, the terminal device and the second network element may establish the second NAS session when the first NAS session has been established between the terminal device and the first network element. In comparison with a solution in which the first network element forwards a NAS message, this improves NAS message transmission efficiency. In addition, in this solution, the NAS message transmitted between the second network element and the terminal device does not depend on the first network element, so that a principle of function decoupling between network elements can be matched, flexibility of a network architecture can be improved, and NAS message transmission security can be improved. For example, when the first network element is deployed in an operator network, and the second network element and an access network device are deployed in a campus, according to this solution, transmission of a NAS message between the terminal device and the second network element can meet a requirement that a message does not go out of the campus. In comparison with the solution in which the first network element forwards a NAS message, this solution improves security of the NAS message.

S301 to S303 are described in detail below.

In S301, the first request message is transmitted via the first NAS session. In other words, before the terminal device sends the first request message, the first NAS session is established between the terminal device and the first network element.

The first NAS session established between the terminal device and the first network element may be understood as that a communication connection, for example, a radio resource control (radio resource control, RRC) connection, is established between the terminal device and the access network device, and a communication connection, for example, a signaling connection, is established between the access network device and the first network element, so that the access network device forwards the NAS message between the terminal device and the first network element.

The following describes establishment of the first NAS session.

Optionally, establishment of the first NAS session may be triggered by using a first NAS session establishment request message sent by the terminal device to the first network element.

Optionally, after establishment of the first NAS session is triggered, the first network element may determine whether establishment of the first NAS session is allowed. For example, the first network element may perform authentication and authorization on the terminal device (for example, may perform authentication and authorization based on subscription information of the terminal device), to determine whether the terminal device is allowed to establish the first NAS session.

Optionally, in a process of establishing the first NAS session, the first network element may enable security of the first NAS session. For a method for enabling security of the first NAS session, refer to a procedure related to a NAS security mode, for example, a NAS security mode command (NAS security mode command), between an AMF network element (corresponding to the first network element) and a terminal device in the conventional technology.

In a possible case, for the process of establishing the first NAS session, refer to an existing registration procedure, for example, a registration procedure in a 5G system. In other words, the terminal device may initiate establishment of the first NAS session through a registration procedure. In this case, a registration request message sent by the terminal device is equivalent to the first NAS session establishment request message, and may be used to request establishment of the first NAS session. For details of the registration procedure, refer to an existing standard protocol. Details are not described herein.

Optionally, the first NAS session may be identified by identification information (the identification information is referred to as an identifier of the first NAS session below). In a possible implementation, the identifier of the first NAS session may be allocated by the terminal device, and the terminal device sends the identifier of the first NAS session to the first network element. For example, the terminal device may include the identifier of the first NAS session in the first NAS session establishment request message. In another possible implementation, the identifier of the first NAS session may be allocated by the first network element, and the first network element sends the identifier of the first NAS session to the terminal device. For example, the first network element may include the identifier of the first NAS session in a response message for the first NAS session establishment request message, and send the response message to the terminal device.

Further, the first network element may send a correspondence between the identifier of the first NAS session and information about the first network element to the access network device. The access network device may store the received correspondence in a context of the terminal device, to subsequently forward a NAS message (namely, a message that needs to be transmitted via the first NAS session) between the first network element and the terminal device. A specific implementation in which the access network device forwards the NAS message between the first network element and the terminal device by using the correspondence is described below. Details are not described herein.

The information about the first network element may include address information of the first network element, for example, a fully qualified domain name (fully qualified domain name, FQDN) or an internet protocol (internet protocol, IP) address of the first network element, and identification information, for example, a character string, indicating a context of the first NAS session in the first network element.

For example, if an interface between the access network device and the first network element is a service-oriented interface, the information about the first network element may be a uniform resource locator (uniform resource locator, URL), a host name (host name) of the URL is the FQDN or the IP address of the first network element, and the URL includes the identification information indicating the context of the first NAS session in the first network element. If an interface between the access network device and the first network element is according to a stream control transmission protocol (stream control transmission protocol, SCTP) protocol, the information about the first network element may include the address information (for example, the IP address) of the first network element and an identifier indicating the context of the first NAS session in the first network element, for example, a next generation application protocol (next generation application protocol, NGAP) user equipment identifier (NGAP UE ID) allocated by the first network element. In the foregoing example, the identification information indicating the context of the first NAS session in the first network element may alternatively be identification information of the terminal device, for example, a temporary identifier allocated by the first network element to the terminal device.

Optionally, the access network device may configure a corresponding radio bearer (radio bearer, RB) for the first NAS session. The first NAS session may correspond to one or more radio bearers. In a possible implementation, the access network device may allocate corresponding identification information (referred to as an RB identifier below) to each radio bearer corresponding to the first NAS session. For example, the RB identifier may be a media access control (media access control, MAC) layer channel identifier (MAC channel ID).

Optionally, the access network device may further send, to the terminal device, information used to configure the radio bearer corresponding to the first NAS session. After receiving the information, when subsequently sending a NAS message to the first network element, the terminal device may send the NAS message over the radio bearer corresponding to the first NAS session.

Optionally, if the access network device further obtains the correspondence between the identifier of the first NAS session and the information about the first network element, the access network device may store a correspondence between the identifier of the first NAS session, the information about the first network element, and the radio bearer corresponding to the first NAS session.

In a possible scenario, the radio bearer corresponding to the first NAS session may be used by the access network device to forward the NAS message between the first network element and the terminal device. A specific implementation is described below. Details are not described herein.

The foregoing describes establishment of the first NAS session. After establishment of the first NAS session is completed, the terminal device sends the first request message to the first network element via the first NAS session. It may be understood that sending the first request message via the first NAS session includes: The terminal device sends the first request message to the access network device, and the access network device sends the first request message to the first network element after receiving the first request message.

With reference to the foregoing descriptions of the manner of transmitting the NAS message via the first NAS session, the terminal device may send the first request message via the first NAS session in the following possible manner:
The terminal device sends an RRC message to the access network device, where the RRC message includes the first request message. In addition, the RRC message is sent over the radio bearer corresponding to the first NAS session, and/or the RRC message includes the identifier of the first NAS session. The access network device may determine, based on the radio bearer corresponding to the first NAS session and/or the identifier of the first NAS session, to send the first request message to the first network element. For details, refer to the foregoing descriptions. Details are not described herein again.

After receiving the first request message, the first network element may determine the second network element based on the first request message. Specifically, the first network element determines, based on the first request message, one or more network elements that can provide the service. Further, the first network element determines one network element to provide the service for the terminal device, and the network element that actually provides the service to the terminal device is the second network element.

In S302, after the first network element receives the first request message, the first network element may trigger establishment of the second NAS session, where the second NAS session is used for transmission of a NAS message between the terminal device and the second network element. In other words, the first network element may trigger establishment of the second NAS session between the second network element and the terminal device.

The second NAS session established between the terminal device and the second network element may be understood as that a communication connection, for example, an RRC connection, is established between the terminal device and the access network device, and a communication connection, for example, a signaling connection, is established between the access network device and the second network element, so that the access network device forwards the NAS message between the terminal device and the second network element, and the first network element does not need to forward the NAS message between the terminal device and the second network element.

The following describes in detail how to trigger establishment of the second NAS session.

In this embodiment of this application, the first request message may include the following three cases. The following describes, with reference to different cases, specific implementations in which the first network element triggers establishment of the second NAS session.

Case 1: The first request message is used to request the service, and is not used to request establishment of the NAS session between the terminal device and the second network element.

In the case 1, the service may be any type of network service. This is not limited in this embodiment of this application.

For example, the first request message may be a protocol data unit (protocol data unit, PDU) session establishment request. In this case, the second network element may be an SMF network element. Alternatively, the first request message may be a UE policy session establishment request. In this case, the second network element may be a PCF network element. Alternatively, the first request message may be a positioning request message. In this case, the second network element may be an LMF network element. Alternatively, the first request message may be used to request an AI service. In this case, the second network element may be a network element that can provide the AI service, for example, an AI proxy network element.

In a possible implementation of the case 1, the first network element may determine, based on at least one of information such as the subscription information of the terminal device and a deployment location of the first network element, that the second NAS session needs to be established, and trigger establishment of the second NAS session. For example, the subscription information of the terminal device includes subscription information of the service requested via the first request message, and the subscription information of the service indicates that a NAS message corresponding to the service does not go out of the campus. The first network element may determine, based on that the first network element is not deployed in the campus, that the second NAS session needs to be established, to facilitate direct transmission of the NAS message between the second network element and the terminal device. In this example, the first network element may select, for the second NAS session, a network element that is deployed in the campus as the second network element.

In another possible implementation of the case 1, after receiving the first request message, the first network element may send a fifth request message (which may be the first request message, or may be a request message that is generated by the first network element and that is used to request the service) to the second network element. The second network element may determine, based on the fifth request message, that the second NAS session further needs to be established, and send fourth information to the first network element, where the fourth information indicates to establish the second NAS session. In this implementation, the first network element may trigger establishment of the second NAS session based on the fourth information.

For example, it is assumed that the first request message is a positioning request message. After receiving the first request message, the second network element determines that the second NAS session further needs to be established, to facilitate transmission of location information of the terminal device via the second NAS session. Based on this, the second network element sends the fourth information to the first network element, to indicate to establish the second NAS session.

Case 2: The first request message is used to request the service, and the first request message is further used to request establishment of the NAS session between the terminal device and the second network element. For example, the first request message includes indication information for requesting establishment of the second NAS session.

In the case 2, for the service requested via the first request message, refer to the foregoing descriptions of the case 1. Details are not described herein again.

In the case 2, when determining, based on the first request message, that the service needs to be provided, the first network element may determine that the second NAS session further needs to be established. In other words, in this implementation, the first network element may trigger establishment of the second NAS session based on the first request message. For example, the first network element determines, based on the indication information that is included in the first request message and that is used to request establishment of the second NAS session, that the second NAS session needs to be established.

In the case 1 or the case 2, after the second NAS session is established, a NAS message transmitted via the second NAS session may be a NAS message related to the service (namely, the service requested via the first request message). In other words, the second NAS session provides a NAS signaling channel between the terminal device and the second network element for the service.

Case 3: The first request message is used to request establishment of the NAS session between the terminal device and the second network element. In the case 3, the first request message may also be referred to as a second NAS session establishment request message. In the case 3, the second NAS session is used to provide a NAS signaling channel between the terminal device and the second network element, the NAS signaling channel is used for transmission of a NAS message related to a service, and the service is provided by the second network element.

In the case 3, the first network element may directly determine, based on the first request message, that the second NAS session needs to be established, and trigger establishment of the second NAS session.

The foregoing describes different cases of the first request message and how to trigger establishment of the second NAS session in the different cases. In addition, this embodiment of this application further provides some optional solutions related to triggering establishment of the second NAS session.

Optionally, the first request message may further indicate a type of the second NAS session. For example, the first request message may include information indicating the type of the second NAS session. The type of the second NAS session may correspond to the service provided by the second network element. For example, the type of the second NAS session may be a NAS session of a session type. In this case, the corresponding service (namely, the service provided by the second network element) is a session service (for example, the second network element is an SMF network element, and may provide a service for establishing a PDU session). For another example, the type of the second NAS session may be a NAS session of a positioning type. In this case, the corresponding service is a positioning service (for example, the second network element is an LMF network element, and may provide a positioning service).

Optionally, the first request message may further include other related information of the second NAS session. The first network element does not process the information, but sends the information to the second network element (for example, the information may be sent to the second network element together with a second request message described subsequently). For example, when the first request message is used to request establishment of a PDU session, the first request message may include information such as a session and service continuity (session and service continuity, SSC) mode (SSC mode) and an IP address type of the PDU session.

Optionally, for determining of the second network element, the first network element may select, based on first information, the second network element from a network element that can provide the service. The first information may also be referred to as network element selection information. The first information is not limited in this embodiment of this application. For example, the first network element may determine the first information from the information included in the first request message, or the first network element may determine the first information from the subscription information of the terminal device, or the first network element may determine the first information from related information of the terminal device (for example, the location information of the terminal device).

For example, if the first request message is used to request establishment of a PDU session, the first information may be a data network name (data network name, DNN), a slice identifier, and other information that are included in the first request message. The first network element may select an appropriate SMF network element as the second network element based on the first information.

For another example, when the subscription information of the terminal device includes the first information, if the first request message includes the first information, the first network element may select an appropriate network element as the second network element based on an intersection set of the first information in the subscription information of the terminal device and the first information included in the first request message. Optionally, the first information in the subscription information of the terminal device may include default network element selection information. If the first request message does not include the first information, the first network element may select an appropriate network element as the second network element based on the default network element selection information in the subscription information of the terminal device. In a possible case, the first information in the subscription information of the terminal device may correspond to the type of the NAS session. The first network element may determine, based on the type of the second NAS session, the subscribed first information corresponding to the type of the second NAS session, and then further select the second network element based on the corresponding subscribed first information.

For another example, the first network element may select, based on the location information of the terminal device, a network element that is closer to the terminal device from the network element that can provide the service as the second network element.

Optionally, before the first network element triggers establishment of the second NAS session, the first network element may determine whether establishment of the second NAS session is allowed. If it is determined that establishment of the second NAS session is allowed, the first network element triggers establishment of the second NAS session, and continues a subsequent procedure. If it is determined that establishment of the second NAS session is not allowed, establishment of the second NAS session is not triggered.

Optionally, when the first request message is used to request establishment of the second NAS session (for example, the first request message is the second NAS session establishment request message, or the first request message includes the indication information for requesting establishment of the second NAS session), and the first network element determines that establishment of the second NAS session is not allowed, the first network element may send, to the terminal device, a response message indicating that the second NAS session fails to be established.

In a possible implementation of determining whether establishment of the second NAS session is allowed, the first network element may determine, based on the subscription information of the terminal device, whether establishment of the second NAS session is allowed. For example, the subscription information of the terminal device may include a type of a NAS session that is allowed to be established, and the first request message sent by the terminal device to the first network element indicates the type of the second NAS session. If the first network element determines that the type of the second NAS session is the type of the NAS session that is allowed to be established, the first network element may determine that establishment of the second NAS session is allowed; or if the first network element determines that the type of the second NAS session is not the type of the NAS session that is allowed to be established, the first network element may determine that establishment of the second NAS session is not allowed.

For another example, the subscription information of the terminal device may include information indicating a service for which establishment of a NAS session is allowed. The first network element determines, based on the first request message and the subscription information of the terminal device, whether a NAS session can be established for the service requested by the terminal device. If the first network element determines that the NAS session can be established for the service requested by the terminal device, the first network element may determine that establishment of the second NAS session is allowed. If the first network element determines that the NAS session cannot be established for the service requested by the terminal device, the first network element may determine that establishment of the second NAS session is not allowed.

The foregoing describes how to trigger establishment of the second NAS session. The following describes a subsequent procedure after establishment of the second NAS session is triggered.

Optionally, if the first network element triggers establishment of the second NAS session, the first network element may send the second request message to the second network element. The second request message may also be referred to as a second NAS session establishment request, and is used to request establishment of the second NAS session. It may also be understood that the first network element sends the second request message to the second network element, to trigger establishment of the second NAS session.

Optionally, the second request message may further be used to request the service requested via the first request message, for example, request establishment of a PDU session, or request LCS related information.

In a possible case, if the first network element receives the fourth information from the second network element, the first network element may not need to send the second request message to the second network element. In this case, after triggering establishment of the second NAS session based on the fourth information, the first network element may directly request the access network device to establish the second NAS session. For example, the fourth information may include information used to generate a third request message, for example, information such as address information of the second network element and identification information indicating a context of the second NAS session in the second network element. The first network element may generate the third request message based on the fourth information and send the third request message to the access network device. The third request message is used to request establishment of the second NAS session. For details, refer to the following descriptions of establishing a direct transmission channel between the second network element and the access network device. Details are not described herein. In this case, the first network element may further send an identifier of the second NAS session to the second network element.

Alternatively, after the first network element receives the fourth information from the second network element, the first network element may also send the second request message to the second network element.

Optionally, the first network element may obtain the identifier of the second NAS session, and send the identifier of the second NAS session to the second network element, where the identifier of the second NAS session identifies the second NAS session. For example, the second request message may include the identifier of the second NAS session, or the first network element sends the second request message together with the identifier of the second NAS session to the second network element.

In a possible implementation, the identifier of the second NAS session may be allocated by the terminal device. In this implementation, the terminal device may send the identifier of the second NAS session to the first network element, and then the first network element sends the identifier of the second NAS session to the second network element. For example, the first request message sent by the terminal device to the first network element includes the identifier of the second NAS session. For another example, the terminal device sends the identifier of the second NAS session together with the first request message to the first network element.

In another possible implementation, the identifier of the second NAS session may alternatively be allocated by the first network element. After determining that the second NAS session needs to be established (for example, the first network element determines, based on the first request message or the fourth information, that the second NAS session needs to be established), the first network element may allocate the identifier of the second NAS session to the second NAS session.

It may be understood that, to determine a corresponding NAS session based on an identifier of the NAS session, in this embodiment of this application, there is a one-to-one correspondence between the NAS session and the identifier of the NAS session. In other words, when the terminal device or the first network element allocates an identifier to a NAS session, uniqueness of the identifier of each NAS session needs to be ensured.

The following describes specific implementations in which the second network element and the terminal device establish the second NAS session in S303.

If the first network element sends the second request message to the second network element, after the second network element receives the second request message, the second network element may determine, based on the second request message, to establish the second NAS session. Further, the second network element sends a first response message for the second request message to the first network element.

The first response message may have different functions in different cases. Descriptions are provided in the following embodiments with reference to different cases. Details are not described herein.

Optionally, after determining to establish the second NAS session (for example, after the second network element determines, based on the first request message, to establish the second NAS session, or after the second network element receives the second request message), the second network element may obtain quality of service (quality of service, QoS) information corresponding to the second NAS session, for example, at least one of the following: a QoS level (for example, a scheduling priority, a QoS class identifier (QoS class identifier, QCI), a 5G QoS identifier (5G QoS identifier, 5QI), or similar information indicating a scheduling priority), a maximum bandwidth, an indication indicating whether to map to a data radio bearer (data radio bearer, DRB), a guaranteed bandwidth, or other information, where an indication indicating to map to the DRB indicates that a message of the second NAS session is transmitted over the DRB.

In a possible implementation, the second network element may determine, from the subscription information of the terminal device, the QoS information corresponding to the type of the second NAS session. How the second network element determines the type of the second NAS session is not limited in this embodiment of this application. For example, the second request message may include the type of the second NAS session. For another example, the second network element may determine the type of the corresponding NAS session based on the service that can be provided by the second network element. For example, if the second network element is an SMF network element, a PDU session may be established. In this case, the second network element may determine that the type of the second NAS session is "PDU session" or "NAS session established for the PDU session".

It may be understood that, to establish the second NAS session, the direct transmission channel of the NAS message needs to be established between the second network element and the access network device. The following uses a scenario in which the second network element receives the second request message as an example to describe specific implementations of establishing the direct transmission channel between the second network element and the access network device.

In a first possible implementation, the first response message sent by the second network element to the first network element includes the third request message, the third request message is used to request the access network device to establish the second NAS session, and the third request message includes at least one of the following: the address information of the second network element, the identification information that is allocated by the second network element to the second NAS session and that indicates the context of the second NAS session in the second network element, or the identifier of the second NAS session. For example, when an interface between the second network element and the access network device is a service-oriented interface, the identification information indicating the context of the second NAS session in the second network element may be a character string or an identifier set by the second network element. When the interface between the second network element and the access network device is an SCTP interface, the identification information may be NGAP UE ID information allocated by the second network element. After receiving the first response message, the first network element forwards the third request message in the first response message to the access network device. The access network device determines, based on the third request message, to establish the communication connection to the second network element. Further, the access network device may store a correspondence between the identifier of the second NAS session and the address information of the second network element.

In a second possible implementation, the first response message sent by the second network element to the first network element includes second indication information, and the second indication information indicates that the access network device needs to establish the second NAS session. After receiving the first response message, the first network element generates the third request message based on the second indication information in the first response message, and sends the third request message to the access network device. In this implementation, the first response message further includes the information used to generate the third request message. For details about the third request message, refer to the foregoing descriptions. The access network device determines, based on the third request message, to establish the communication connection to the second network element. Further, the access network device may store a correspondence between the identifier of the second NAS session and the address information of the second network element.

In a third possible implementation, the second network element directly sends the third request message to the access network device ("directly" means that the first network element does not need to forward the third request message). For details about the third request message, refer to the foregoing descriptions. The access network device determines, based on the third request message, to establish the communication connection to the second network element. Further, the access network device may store a correspondence between the identifier of the second NAS session and the address information of the second network element.

Optionally, in this implementation, the second request message sent by the first network element to the second network element may include address information of the access network device (for example, an IP address of the access network device) and a first identifier, where the first identifier indicates a context of the terminal device in the access network device. The second network element may determine the access network device based on the address information of the access network device, to directly send the third request message to the access network device. The third request message may include the first identifier. After receiving the third request message, the access network device may store the correspondence between the identifier of the second NAS session and the address information of the second network element in the context of the terminal device based on the third request message. For example, the access network device may determine the context of the terminal device based on the first identifier in the third request message.

Optionally, in this implementation, the first identifier obtained by the first network element may be sent by the access network device to the first network element. For example, in a process of establishing the first NAS session, the access network device may allocate the first identifier to the context of the terminal device, and send the first identifier to the first network element.

Optionally, in the foregoing plurality of implementations of establishing the direct transmission channel between the second network element and the access network device, in addition to the address information of the second network element and the identifier of the second NAS session, the third request message may further include quality of service (quality of service, QoS) information of the second NAS session. Correspondingly, in the second implementation, the second network element further needs to send the quality of service information of the second NAS session to the first network element via the first response message, so that the first network element generates the third request message.

Further, after the access network device receives the third request message and determines to establish the communication connection to the second network element, the access network device may send a third response message for the third request message to the second network element. The third response message includes the address information of the access network device and a second identifier, and the second identifier indicates a context of the second NAS session in the access network device. For example, the second identifier may be a character string. For another example, the second identifier may be a RAN NGAP UE ID allocated by the access network device to the second NAS session.

The second network element may store a correspondence between the second identifier, the identifier of the second NAS session, and the address information of the access network device.

For sending the third response message by the access network device to the second network element, in the first and second possible implementations of establishing the direct transmission channel between the second network element and the access network device, the third response message may be sent to the second network element through the first network element. In the third possible implementation, the third response message may be directly sent by the access network device to the second network element (without passing through the first network element).

In this case, the second NAS session is established between the terminal device and the second network element, and the NAS message may be transmitted between the terminal device and the second network element through the access network device, without a need of forwarding the NAS message by the first network element.

Optionally, if the second network element directly sends the third request message to the access network device to establish the second NAS session, after receiving the third response message, the second network element may send, to the first network element, the first response message indicating that the second NAS session is successfully established.

Optionally, after receiving the third request message, the access network device may further allocate an interface identifier to an interface that is between the access network device and the second network element and that is associated with the second NAS session. Further, the access network device may further send the interface identifier to the second network element via the third response message, and subsequently, the second network element may send a downlink NAS message by using the interface identifier. The interface identifier may correspond to the second identifier, or the interface identifier is the second identifier.

For example, when the interface between the second network element and the access network device is a service-oriented interface, the interface identifier may be a URL, and the URL includes an address of the access network device and the second identifier. For another example, when the interface between the second network element and the access network device is an SCTP-based interface, the interface identifier may be a RAN NGAP UE ID allocated by the access network device to the second NAS session, and the RAN NGAP UE ID may indicate the context of the second NAS session in the access network device.

Optionally, after receiving the third request message, the access network device may configure one or more corresponding radio bearers for the second NAS session. Each radio bearer corresponding to the second NAS session may have a corresponding RB identifier, for example, a MAC channel ID.

A specific implementation in which the access network device configures the corresponding radio bearer for the second NAS session is not limited in this embodiment of this application. For example, if the third request message includes the QoS information of the second NAS session, the access network device may configure the corresponding radio bearer for the second NAS session based on the QoS information of the second NAS session.

Optionally, the access network device may send, to the terminal device, second information used to configure the radio bearer corresponding to the second NAS session. After receiving the second information, when subsequently sending a NAS message to the second network element, the terminal device may send the NAS message to the second network element over the radio bearer corresponding to the second NAS session.

It may be understood that, in the foregoing embodiment, the method for establishing the second NAS session between the terminal device and the second network element may also be applied to establishing another NAS session between the terminal device and another network element. In other words, the terminal device may separately establish different second NAS sessions with a plurality of second network elements.

The foregoing describes interaction between the access network device, the second network element, and the first network element in the process of establishing the second NAS session. In addition, the first network element or the second network element may send a second NAS session establishment success indication or a second NAS session establishment indication to the terminal device, to notify the terminal device of establishment of the second NAS session. The second NAS session establishment success indication indicates that the second NAS session is successfully established, and the second NAS session establishment indication indicates to establish the second NAS session. In addition, the second NAS session establishment success indication or the second NAS session establishment indication is sent to the terminal device together with the identifier of the second NAS session. In other words, in S303, the terminal device may receive the identifier of the second NAS session and at least one of the second NAS session establishment success indication or the second NAS session establishment indication. The terminal device may determine, based on the second NAS session establishment success indication and the identifier of the second NAS session, that the second NAS session is successfully established. Alternatively, the terminal device may determine, based on the second NAS session establishment indication and the identifier of the second NAS session, that the second NAS session needs to be established.

Based on the three different cases of the first request message in S301, the terminal device receives different indication information (namely, the second NAS session establishment success indication or the second NAS session establishment indication). The following separately provides detailed descriptions.

In the case 1, the terminal device does not request establishment of the second NAS session. In this case, in a process of establishing the second NAS session, the first network element or the second network element sends the second NAS session establishment indication to the terminal device, that is, the terminal device needs to be notified to establish the second NAS session.

In the case 2 and the case 3, the terminal device requests establishment of the second NAS session. In the two cases, after the second NAS session is successfully established, the first network element or the second network element sends the second NAS session establishment success indication to the terminal device.

If the second network element sends the second NAS session establishment success indication or the second NAS session establishment indication to the terminal device, in a possible implementation, when the second network element sends the third request message to the access network device (for example, the first network element forwards the third request message from the second network element to the access network device, or the second network element directly sends the third request message to the access network device), the second network element may send a second response message to the terminal device using the third request message. In other words, the third request message includes the second response message that needs to be sent to the terminal device. After receiving the third request message, the access network device sends the second response message in the third request message to the terminal device. The second response message includes the identifier of the second NAS session and at least one of the second NAS session establishment success indication or the second NAS session establishment indication.

If the first network element sends the second NAS session establishment success indication or the second NAS session establishment indication to the terminal device, in a possible implementation, after receiving the first response message, the first network element may send the second NAS session establishment success indication or the second NAS session establishment indication to the terminal device based on the first response message. For example, the first response message indicates that the second NAS session is successfully established, and the first network element determines, based on the first response message, to send the second NAS session establishment success indication or the second NAS session establishment indication to the terminal device. For another example, the first response message includes indication information indicating to notify the terminal device that the second NAS session is successfully established, and the first network element sends the second NAS session establishment success indication or the second NAS session establishment indication to the terminal device based on the indication information. When sending the second NAS session establishment success indication or the second NAS session establishment indication to the terminal device, the first network element sends the second NAS session establishment success indication or the second NAS session establishment indication together with the identifier of the second NAS session to the access network device, and the access network device sends the second NAS session establishment success indication or the second NAS session establishment indication together with the identifier of the second NAS session to the terminal device. In another possible implementation, after receiving the fourth information, the first network element may send the second NAS session establishment success indication or the second NAS session establishment indication to the terminal device.

After the second NAS session is successfully established, a NAS message may be transmitted between the terminal device and the second network element via the second NAS session.

Optionally, in an uplink transmission scenario, after S303, S304 may be included.

S304: The terminal device sends a first NAS message to the second network element via the second NAS session based on the identifier of the second NAS session (the first NAS message may be any NAS message sent via the second NAS session).

That the terminal device sends the first NAS message to the second network element via the second NAS session includes: The terminal device sends the first NAS message to the access network device, and the access network device forwards the first NAS message to the second network element. Specifically, when sending an RRC message including the first NAS message to the access network device, the terminal device further sends the identifier of the second NAS session, and/or the terminal device determines, based on the identifier of the second NAS session, the radio bearer corresponding to the second NAS session, and sends the first NAS message to the access network device over the radio bearer. After receiving the first NAS message, the access network device may determine, based on the identifier of the second NAS session or the radio bearer for receiving the first NAS message, that the first NAS message is a NAS message corresponding to the second NAS session, and send the first NAS message to the second network element corresponding to the second NAS session. For details, refer to the following descriptions of an uplink message transmission scenario of a third NAS session.

Optionally, in a downlink transmission scenario, after S303, S305 may be included.

S305: The second network element sends a second NAS message to the terminal device via the second NAS session.

S305 includes: The second network element sends the second NAS message to the access network device, and the access network device forwards the second NAS message to the terminal device. Specifically, when sending the second NAS message to the access network device, the second network element performs at least one of the following: sending the identifier of the second NAS session together, sending the second identifier together, and sending the second NAS message through the interface associated with the second NAS session. After receiving the second NAS message, the access network device may determine, based on at least one of the following: the identifier of the second NAS session, the second identifier, or the identifier of the interface for receiving the second NAS message, the second NAS message corresponding to the second NAS session. When sending the second NAS message to the terminal device, the access network device may send the identifier of the second NAS session together, and/or send the second NAS message to the terminal device over the radio bearer corresponding to the second NAS session. After receiving the second NAS message, the terminal device may determine, based on the identifier of the second NAS session and/or the radio bearer for receiving the second NAS message, the second NAS session corresponding to the second NAS message. For details, refer to the following descriptions of downlink message transmission of the third NAS session.

It may be understood that, in this embodiment of this application, the first NAS session is established between the terminal device and the first network element, and the second NAS session is further established between the terminal device and the second network element. In addition, another NAS session may further be established between the terminal device and another network element. When a message is transmitted via the NAS session, the access network device needs to forward the NAS message. Therefore, in a scenario in which a NAS message is transmitted via a NAS session, the access network device needs to determine a session to which a received NAS message belongs. In an uplink transmission scenario, the access network device may determine, based on a NAS session identifier received when a NAS message is received and/or a radio bearer for receiving the NAS message, a NAS session to which the NAS message belongs, and further determine a target network element of the NAS message based on the session to which the NAS message belongs, to forward the NAS message to the target network element. In a downlink transmission scenario, after receiving a NAS message, the access network device may determine, based on at least one of the following: a received NAS session identifier, an identifier indicating a context of a NAS session in the access network device, or an identifier of an interface for receiving the NAS message, the session to which the NAS message belongs, and send the NAS message to the terminal device via the NAS session to which the NAS message belongs.

The following describes in detail how the access network device determines a NAS session to which a NAS message belongs and sends the NAS message to a target network element/the terminal device in an uplink transmission scenario and a downlink transmission scenario.

In an uplink transmission scenario, after the terminal device sends a third NAS message (the third NAS message may be any NAS message) via a third NAS session (the third NAS session may be any NAS session established between the terminal device and the first network element, the second network element, or another network element), the access network device receives the third NAS message from the terminal device. The access network device may determine that the third NAS message belongs to the third NAS session, determine a target network element of the third NAS message (the target network element of the third NAS message may be referred to as a third network element), and send the third NAS message to the target network element.

In a possible implementation, the terminal device sends an identifier of the third NAS session together with the third NAS message to the access network device. After receiving the identifier of the third NAS session and the third NAS message, the access network device determines the target network element of the third NAS message based on the identifier of the third NAS session and a first correspondence. The first correspondence indicates that the identifier of the third NAS session corresponds to the target network element of the third NAS message. For example, the first correspondence may include a correspondence between the identifier of the third NAS session and information (for example, information such as identification information and address information) about the target network element of the third NAS message. Further, the access network device sends the third NAS message to the target network element of the third NAS message.

The terminal device sends the third NAS message together with the identifier of the third NAS session to the access network device, and the third NAS message and the identifier of the third NAS session may be carried in a same RRC message for sending. Alternatively, the identifier of the third NAS session may be used as an unencrypted field in a header of the third NAS message.

In another possible implementation, when sending the third NAS message, the terminal device may send the third NAS message to the access network device over a radio bearer corresponding to the third NAS session. After receiving the third NAS message, the access network device may determine the target network element of the third NAS message based on the radio bearer used for transmission of the third NAS message and a second correspondence. The second correspondence indicates that the radio bearer used for transmission of the third NAS message corresponds to the target network element of the third NAS message. For example, the second correspondence may include a correspondence between an identifier of the radio bearer used for transmission of the third NAS message, an identifier of the third NAS session, and information (for example, information such as identification information and address information) about the target network element of the third NAS message. Further, the access network device sends the third NAS message to the target network element of the third NAS message.

If the access network device determines the target network element of the third NAS message based on an RB identifier of the radio bearer used for transmission of the third NAS message and the second correspondence, the access network device may determine the RB identifier based on a MAC channel ID of the third NAS message. Alternatively, the terminal device may include the RB identifier in a message header in which the third NAS message is encapsulated. For example, when the third NAS message is encapsulated according to a service data adaptation protocol (service data adaptation protocol, SDAP), the RB identifier may be carried in an SDAP header.

In a downlink transmission scenario, a third network element (the third network element is a network element that establishes a third NAS session with the terminal device) sends a fourth NAS message (the fourth NAS message may be any NAS message) via the third NAS session. In a possible implementation, the third network element may send, to the access network device, the fourth NAS message together with information that can indicate the third NAS session (for example, an identifier of the third NAS session or a third identifier, where the third identifier indicates a context of the third NAS session in the access network device. Optionally, the third identifier may correspond to an identifier of an interface associated with the third NAS session. For details, refer to the foregoing descriptions of allocating, by the access network device, the interface identifier to the interface associated with the second NAS session). The access network device may determine, based on the information indicating the third NAS session, the third NAS session to which the fourth NAS message belongs, to send the fourth NAS message to the terminal device.

The third network element sends the fourth NAS message together with the information that can indicate the third NAS session to the access network device. The fourth NAS message and the information that can indicate the third NAS session may be carried in a same signaling message for sending, or the identifier of the third NAS session may be used as an unencrypted field in a header of the fourth NAS message.

In another possible implementation, the third network element sends the fourth NAS message to the access network device through an interface associated with the third NAS session. After receiving the fourth NAS message, the access network device may determine, based on an identifier of an interface for receiving the fourth NAS message, the third NAS session to which the fourth NAS message belongs, to send the fourth NAS message to the terminal device. Optionally, in this implementation, when sending the fourth NAS message, the third network element may further send information indicating the third NAS session together.

For sending, by the access network device, the fourth message to the terminal device, in a possible implementation, the access network device may send an identifier of the third NAS session together with the fourth NAS message to the terminal device. Correspondingly, after receiving the fourth NAS message and the identifier of the third NAS session, the terminal device may determine, based on the identifier of the third NAS session, the third NAS session to which the fourth NAS message belongs.

Specifically, when the third network element sends the identifier of the third NAS session together with the fourth NAS message to the access network device, if the identifier of the third NAS session is an unencrypted field in a header of the fourth NAS message, the access network device may directly forward the fourth NAS message to the terminal device. If the fourth NAS message and the identifier of the third NAS session are carried in a same signaling message for sending, the access network device may include the fourth NAS message and the identifier of the third NAS session in a same RRC message and send the RRC message to the terminal device. When the third network element sends the third identifier together with the fourth NAS message to the access network device, or the third network element sends the fourth NAS message through the interface associated with the third NAS session, the access network device may determine the identifier of the third NAS session based on the third identifier or the identifier of the interface for receiving the fourth NAS message (for example, a context of the third NAS session includes the identifier of the third NAS session; and for another example, the access network device stores a correspondence between the identifier of the interface of the fourth NAS message and the identifier of the third NAS session), and send the identifier of the third NAS session together with the fourth NAS message to the terminal device (for example, the identifier of the third NAS session is used as the unencrypted field in the header of the fourth NAS message, or the fourth NAS message and the identifier of the third NAS session are carried in the same RRC message).

For sending, by the access network device, the fourth message to the terminal device, in another possible implementation, the access network device may send the fourth NAS message to the terminal device over the radio bearer corresponding to the third NAS session. Correspondingly, the terminal device may determine, based on that the radio bearer used for transmission of the fourth NAS message corresponds to the third NAS session, the third NAS session to which the fourth NAS message belongs.

Optionally, in the uplink transmission scenario or the downlink transmission scenario, at least two of the following implementations may work simultaneously: an implementation in which a NAS message is transmitted based on an identifier of a NAS session, an implementation in which a NAS message is transmitted based on a radio bearer corresponding to a NAS session, or an implementation in which a NAS message is transmitted based on an interface associated with a NAS session. For example, if the terminal device simultaneously uses the implementation in which the NAS message is transmitted based on the identifier of the NAS session and the implementation in which the NAS message is transmitted based on the radio bearer corresponding to the NAS session, when sending the third NAS message, the terminal device always sends the third NAS message together with the identifier of the third NAS session. In addition, the terminal device determines, based on the correspondence between the third NAS session and the radio bearer, the radio bearer for sending the third NAS message. Similarly, when sending the fourth NAS message, the access network device always sends the fourth NAS message together with the identifier of the third NAS session. In addition, the access network device determines, based on the correspondence between the third NAS session and the radio bearer, the radio bearer for sending the fourth NAS message. For another example, if the third network element simultaneously uses the implementation in which the NAS message is transmitted based on the identifier of the NAS session and the implementation in which the NAS message is transmitted based on the radio bearer corresponding to the NAS session, when sending the fourth NAS message, the third network element always sends the fourth NAS message together with the information indicating the third NAS session, and the third network element sends the fourth NAS message through the interface associated with the third NAS session.

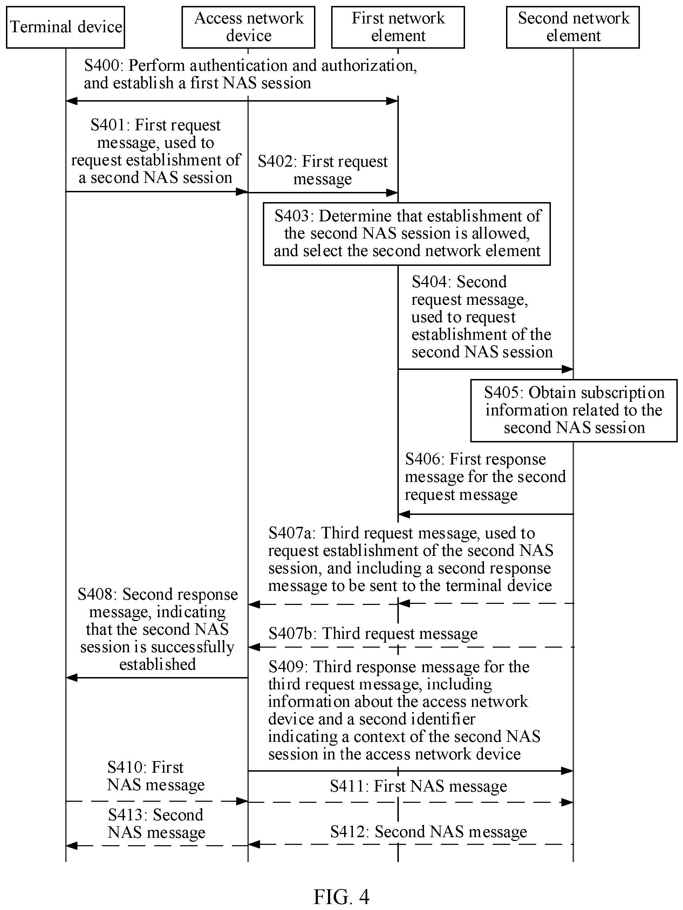

Based on the foregoing embodiment, a possible procedure of establishing the second NAS session between the terminal device and the second network element may be shown in FIG. 4, and includes the following steps.

S401: The terminal device sends a first request message via a first NAS session, where the first request message is used to request establishment of a second NAS session, and the first request message includes an identifier that is of the second NAS session and that is allocated by the terminal device to the second NAS session. Correspondingly, the access network device receives the first request message.

Before S401, the first NAS session is established between the terminal device and the first network element. Optionally, as shown in S400, establishment of the first NAS session may be initiated between the terminal device and the first network element through a registration procedure, and the first network element may perform authentication and authorization on the terminal device, to determine whether the terminal device is allowed to establish the first NAS session.

S402: The access network device sends the first request message to the first network element, and correspondingly, the first network element receives the first request message.

Optionally, if the first request message further includes an identifier of the first NAS session, the access network device may determine, based on the identifier of the first NAS session, that a target network element of the first request message is the first network element.

Optionally, if the first request message is sent over a radio bearer corresponding to the first NAS session, the access network device may determine, based on the radio bearer for transmitting the first request message, that the target network element of the first request message is the first network element.

S403: The first network element determines that establishment of the second NAS session is allowed, and selects the second network element.

Optionally, the first network element may determine, based on subscription information of the terminal device, whether establishment of the second NAS session is allowed.

Optionally, the first network element may select the second network element based on first information. For example, the subscription information of the terminal device and/or a second NAS session establishment request may include the first information.

S404: The first network element sends a second request message to the second network element, where the second request message is used to request establishment of the second NAS session, and the second request message includes the identifier of the second NAS session. Correspondingly, the second network element receives the second request message.

S405: The second network element obtains subscription information related to the second NAS session, for example, QoS information corresponding to the second NAS session.

S406: The second network element sends a first response message for the second request message to the first network element.

Optionally, the first response message may indicate whether the second NAS session is successfully established.

Optionally, if the first response message indicates that the second NAS session fails to be established, the first network element may send, to the terminal device, a response message indicating that the second NAS session fails to be established, and the procedure ends.

S407: The second network element sends a third request message to the access network device, where the third request message is used to request establishment of the second NAS session, and the third request message includes the identifier of the second NAS session and information about the second network element (for example, address information of the second network element). Correspondingly, the access network device receives the third request message. The third request message includes a second response message sent to the terminal device, the second response message indicates that the second NAS session is successfully established, and the second response message includes the identifier of the second NAS session.

Optionally, as shown in S407a, the second network element may send the third request message to the access network device through the first network element. For example, the second network element may include the third request message in the response message for the second NAS session establishment request in S406. After receiving the response message, the first network element forwards the third request message to the access network device.

Alternatively, as shown in S407b, the second network element may directly send the third request message to the access network device. In this manner, the second request message in S404 further includes address information of the access network device and a first identifier (which indicates a context of the terminal device in the access network device), and the second network element sends the third request message to the access network device based on the address information of the access network device, where the third request message further includes the first identifier.

S408: The access network device sends the second response message to the terminal device, and correspondingly, the terminal device receives the second response message.

Optionally, the access network device may further send second information to the terminal device, where the second information is used to configure a radio bearer corresponding to the second NAS session. The terminal device determines, based on the second information, the radio bearer corresponding to the second NAS session.

S409: The access network device sends a third response message for the third request message to the second network element, and correspondingly, the second network element receives the third response message. The third response message includes information about the access network device (for example, the address information) and a second identifier allocated by the access network device to the second NAS session, and the second identifier indicates a context of the second NAS session in the access network device.

After S409, establishment of the second NAS session between the terminal device and the second network element is completed. A NAS message may be directly transmitted between the terminal device and the second network element through the access network device, without needing to be forwarded by the first network element.

For example, in an uplink transmission scenario, after S409, the following steps may be included.

S410: The terminal device sends a first NAS message via the second NAS session. Correspondingly, the access network device receives the first NAS message.

When sending the first NAS message, the terminal device may send the identifier of the second NAS session together, and/or the terminal device may send the first NAS message over the radio bearer corresponding to the second NAS session.

S411: The access network device determines that the first NAS message belongs to the second NAS session, and sends the first NAS message to the second network element based on a stored correspondence between the second NAS session and the second network element (for example, a correspondence between the identifier of the second NAS session and the address information of the second network element). Correspondingly, the second network element receives the first NAS message.

For a specific implementation in which the access network device determines that the first NAS message belongs to the second NAS session, refer to the foregoing descriptions of determining, by the access network device, that the third NAS message belongs to the third NAS session. Details are not described herein again.

For example, in a downlink transmission scenario, after S409, the following steps may be included.

S412: The second network element sends a second NAS message via the second NAS session. Correspondingly, the access network device receives the second NAS message.

When sending the second NAS message, the second network element may send the identifier of the second NAS session and/or the second identifier together.

S413: The access network device determines that the second NAS message belongs to the second NAS session, and sends the second NAS message to the terminal device. Correspondingly, the terminal device receives the second NAS message.

For a specific implementation in which the access network device determines that the second NAS message belongs to the second NAS session and sends the second NAS message to the terminal device, refer to the foregoing descriptions of determining, by the access network device, that the fourth NAS message belongs to the third NAS session and sending the fourth NAS message to the terminal device. Details are not described herein again.

In addition, an embodiment of this application further provides another communication method. According to the communication method, a security mode may be activated for a NAS session established between a terminal device and a core network element, to protect security of a NAS message transmitted via the NAS session, and prevent the NAS message transmitted via the NAS session from being tampered with. The following describes the communication method by using an example in which a security mode is activated for a second NAS session.

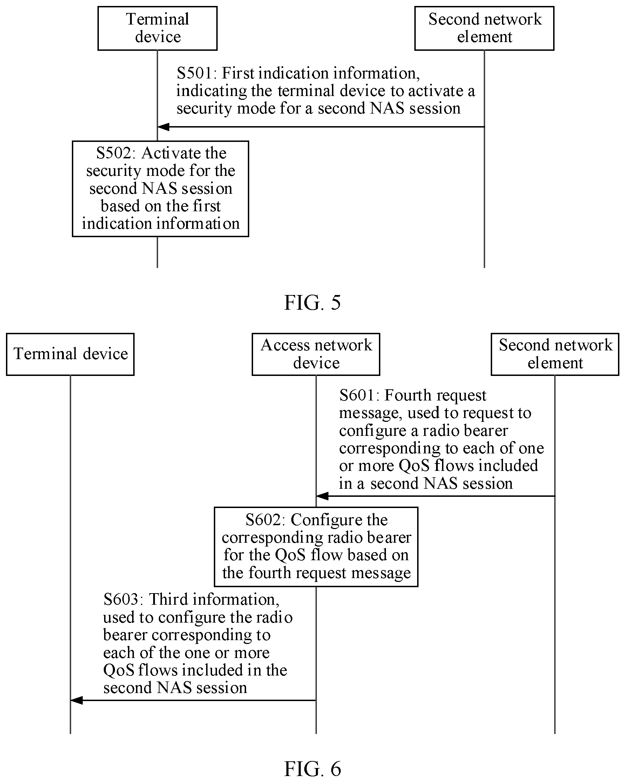

In FIG. 5, the method is illustrated by using an example in which a terminal device and a second network element are execution bodies of the interaction illustration. However, the execution bodies of the interaction illustration are not limited in this application. For example, the second network element in FIG. 5 may alternatively be a module, for example, a chip, a chip system, or a processor, used in the second network element; or may be a logical node, a logical module, or software that can implement all or some functions of the second network element. The terminal device in FIG. 5 may alternatively be a module, for example, a chip, a chip system, or a processor, used in the terminal device; or may be a logical node, a logical module, or software that can implement all or some functions of the terminal device.

As shown in FIG. 5, the communication method includes the following steps.

S501: The second network element sends first indication information to the terminal device, and correspondingly, the terminal device receives the first indication information, where the first indication information indicates the terminal device to activate a security mode for a second NAS session. The security mode includes one or more of the following: performing encryption on a NAS message transmitted via the second NAS session, or performing integrity protection on a NAS message transmitted via the second NAS session.

S502: The terminal device activates (activates) (may also be referred to as starts) the security mode for the second NAS session based on the first indication information.

S501 and S502 are described below in detail.

In S501, the second network element may send the first indication information to the terminal device in a process of establishing the second NAS session. Alternatively, the second network element may send second indication information to the terminal device after establishment of the second NAS session is completed.

For sending the first indication information to the terminal device, the second network element may send the first indication information to the terminal device through a first network element and an access network device. Alternatively, the second network element may send the first indication information to the terminal device through the access network device.

For example, the second network element may include the first indication information in a first response message sent to the first network element. After receiving the first response message, the first network element sends the first indication information in the first response message to the terminal device.

For another example, after establishment of the second NAS session is completed, the second network element may send the first indication information to the terminal device via the second NAS session. Correspondingly, after receiving the first indication information, the access network device sends the first indication information to the terminal device.

Optionally, to transmit a NAS message in the security mode, the second network element may obtain a key of the second NAS session. The key of the second NAS session includes at least one of the following keys: a key used to encrypt the NAS message transmitted via the second NAS session (it may be understood that the key may also be used to decrypt the NAS message transmitted via the second NAS session), or a key used to perform integrity protection on the NAS message transmitted via the second NAS session. If the security mode is activated for the second NAS session, the second network element may perform, by using the key of the second NAS session, corresponding processing on the NAS message transmitted via the second NAS session.

For obtaining the key of the second NAS session, in a possible implementation, the second network element may generate the key of the second NAS session based on a root key of the second NAS session and a preset rule.

A specific implementation of obtaining the root key of the second NAS session by the second network element is not limited in this embodiment of this application. For example, the second request message may include the root key of the second NAS session. Alternatively, subscription information of the terminal device may include the root key of the second NAS session.

If the second request message includes the root key of the second NAS session, the root key of the second NAS session included in the second request message may be obtained (or generated) by the first network element through derivation based on a root key of a first NAS session (or referred to as a root key of the first network element) and an identifier of the second NAS session. For example, it is assumed that the first network element is an AMF network element, and the root key of the first NAS session may be Kamf or Kseaf. For a specific procedure in which the AMF network element derives the root key of the second NAS session based on the root key of the first NAS session, refer to an existing key derivation procedure. Alternatively, the first network element may obtain the root key of the second NAS session from an authentication network element. For example, the authentication network element may be an authentication server function (authentication server function, AUSF) network element, and the AUSF network element may generate the root key of the second NAS session and send the root key to the first network element.

Optionally, if the second network element obtains the key of the second NAS session, before sending the first indication information, the second network element may perform corresponding processing on the first indication information by using the key of the second NAS session, that is, perform at least one of the following: encryption or the integrity protection. In this case, the terminal device may perform verification on the first indication information by using the key of the second NAS session. Details are described in S502. Details are not described herein.

Optionally, the second network element may obtain security capability information of the terminal device. The security capability information indicates one or more of the following algorithms supported by the terminal device: an encryption algorithm (namely, an algorithm for performing encryption on the NAS message) or an integrity protection algorithm (namely, an algorithm for performing integrity protection on the NAS message). The second network element may determine, based on the security capability information of the terminal device, a security algorithm corresponding to the second NAS session. The security algorithm includes one or more of the following algorithms: an algorithm used for the encryption or an algorithm used for the integrity protection.

A specific implementation of obtaining the security capability information of the terminal device by the second network element is not limited in this embodiment of this application. For example, the second request message may include the security capability information, and/or the subscription information of the terminal device may include the security capability information.

In S502, optionally, to transmit the NAS message in the security mode, the terminal device may obtain the key of the second NAS session.

In a possible implementation, the terminal device may generate the key of the second NAS session based on the root key of the first NAS session, the identifier of the second NAS session, and a preset rule. The root key of the first NAS session may be locally generated by the terminal device.

Optionally, if the terminal device obtains the key of the second NAS session, and the second network element performs at least one of the encryption or the integrity protection on the first indication information by using the key of the second NAS session, after receiving the first indication information, the terminal device may perform verification on the first indication information by using the key of the second NAS session. If the verification succeeds, the terminal device activates the security mode. If the verification fails, the terminal device does not activate the security mode.

Optionally, after S502, the method may further include the following step:
The terminal device sends a response message for the first indication information to the second network element, where the response message indicates that the terminal device has activated the security mode for the second NAS session.

It may be understood that S501 and S502 are described by using an example in which the security mode is activated for the second NAS session. The method for activating a security mode for a NAS session provided in this embodiment of this application may be applied to the second NAS session, and may further be adaptively applied to another NAS session, for example, the first NAS session. This is not limited in this embodiment of this application. For example, if the security mode is to be activated for the first NAS session, the first network element may send, to the terminal device, indication information indicating the terminal device to activate the security mode for the first NAS session, and the terminal device activates the security mode for the first NAS session based on the indication information. The first network element may send the indication information to the terminal device in a process of establishing the first NAS session or after establishment of the first NAS session is completed. For details, refer to the foregoing descriptions of S501 and S502. Details are not described herein again.

In addition, an embodiment of this application further provides another communication method. According to the communication method, a corresponding radio bearer may be configured for a QoS flow included in a NAS session established between a terminal device and a core network element, to avoid problems such as information congestion and a latency increase that may be caused when different QoS flows included in the NAS session are transmitted over a same radio bearer. The following describes the communication method by using an example in which a corresponding radio bearer is configured for a QoS flow included in a second NAS session.

In FIG. 6, the method is illustrated by using an example in which an access network device, a terminal device, and a second network element are execution bodies of the interaction illustration. However, the execution bodies of the interaction illustration are not limited in this application. For example, the second network element in FIG. 6 may alternatively be a module, for example, a chip, a chip system, or a processor, used in the second network element; or may be a logical node, a logical module, or software that can implement all or some functions of the second network element. The access network device in FIG. 6 may alternatively be a module, for example, a chip, a chip system, or a processor, used in the access network device; or may be a logical node, a logical module, or software that can implement all or some functions of the access network device. The terminal device in FIG. 6 may alternatively be a module, for example, a chip, a chip system, or a processor, used in the terminal device, or may be a logical node, a logical module, or software that can implement all or some functions of the terminal device.

As shown in FIG. 6, the communication method includes the following steps.

S601: The second network element sends a fourth request message to the access network device. Correspondingly, the access network device receives the fourth request message. The fourth request message is used to request to configure a radio bearer corresponding to each of one or more QoS flows included in a second NAS session.

The QoS flow included in the second NAS session is a QoS flow that is configured by the second network element for the second NAS session and to which a NAS message transmitted via the second NAS session can be mapped.

In S601, the second network element may send the fourth request message to the access network device in a process of establishing the second NAS session. For example, the fourth request message may be carried in a third request message.

Alternatively, the second network element may send the fourth request message to the access network device after establishment of the second NAS session is completed.

In S601, the fourth request message may include the following information: identification information of each of the one or more QoS flows included in the second NAS session, and a QoS parameter corresponding to each QoS flow, for example, information such as a QoS level, a 5QI, and a maximum bandwidth.

The one or more QoS flows included in the second NAS session may be all QoS flows included in the second NAS session, or may be some QoS flows included in the second NAS session. In other words, the access network device may configure, based on the fourth request message, a corresponding radio bearer for each of all the QoS flows included in the second NAS session, or may configure a corresponding radio bearer for each of the some QoS flows included in the second NAS session.

Optionally, the fourth request message may further include a mapping rule of an uplink NAS message, and the mapping rule includes a correspondence between an uplink NAS message transmitted via the second NAS session and each QoS flow. In this case, after receiving the fourth request message, the access network device may send the mapping rule to the terminal device, so that when subsequently sending a NAS message via the second NAS session, the terminal device may determine a QoS flow corresponding to the NAS message.

S602: The access network device configures, based on the fourth request message, the corresponding radio bearer for each of the one or more QoS flows included in the second NAS session.

The one or more QoS flows included in the second NAS session and the configured radio bearer may be in one-to-one correspondence, in other words, in the one or more QoS flows included in the second NAS session, different QoS flows correspond to different radio bearers. Alternatively, the one or more QoS flows included in the second NAS session and the configured radio bearer may be in many-to-one relationship, in other words, a plurality of QoS flows are mapped to one radio bearer. For example, the access network device maps all QoS flows in the one or more QoS flows included in the second NAS session to one radio bearer. For another example, the access network device maps some QoS flows in the one or more QoS flows included in the second NAS session to one radio bearer, and maps another QoS flow to another radio bearer.

S603: The access network device sends third information to the terminal device, where the third information is used to configure the radio bearer corresponding to each of the one or more QoS flows included in the second NAS session.

Correspondingly, after receiving the third information, the terminal device may determine, based on the third information, the correspondence between each of the one or more QoS flows included in the second NAS session and the configured radio bearer. Subsequently, the terminal device may send an uplink NAS message based on the correspondence between the QoS flow and the radio bearer over a radio bearer corresponding to a QoS flow corresponding to the uplink NAS message. Alternatively, the terminal device may determine, based on a radio bearer for receiving a downlink NAS message, a QoS flow corresponding to the downlink NAS message.

Optionally, after S603, in an uplink transmission scenario, that is, when sending a NAS message via the second NAS session, the terminal device may indicate a QoS flow corresponding to the NAS message.

For example, after S603, the method may include the following steps:
The terminal device sends, via the second NAS session, a first NAS message and identification information of a first QoS flow corresponding to the first NAS message. Correspondingly, the access network device receives the first NAS message and the identification information of the first QoS flow. The first QoS flow is a QoS flow in the one or more QoS flows included in the second NAS session. Further, the access network device sends the first NAS message and the identification information of the first QoS flow to the second network element.

Optionally, after S603, in an uplink transmission scenario, when sending a NAS message via the second NAS session, the terminal device may determine a radio bearer corresponding to a QoS flow corresponding to the NAS message, and send the NAS message over the radio bearer corresponding to the QoS flow. After receiving the NAS message, the access network device may determine, based on the radio bearer used for transmission of the NAS message, the QoS flow corresponding to the NAS message, so that when sending the NAS message to the second network element, the access network device may indicate the QoS flow corresponding to the NAS message.

For example, after S603, the method may include the following steps:
The terminal device sends a first NAS message via the second NAS session. Correspondingly, the access network device receives the first NAS message. The access network device determines, based on a radio bearer used for transmission of the first NAS message, that the first NAS message corresponds to a first QoS flow. The access network device sends the first NAS message and identification information of the first QoS flow to the second network element.

Optionally, after S603, in a downlink transmission scenario, that is, when sending a NAS message via the second NAS session, the second network element may indicate a QoS flow corresponding to the NAS message. After receiving the NAS message, the access network device may determine the QoS flow corresponding to the NAS message and determine a radio bearer corresponding to the QoS flow, to send the NAS message to the terminal device over the radio bearer corresponding to the QoS flow.

For example, after S603, the method may include the following steps:
The second network element sends, via the second NAS session, a second NAS message and identification information of a second QoS flow corresponding to the second NAS message. Correspondingly, the access network device receives the second NAS message and the identification information of the second QoS flow. The second QoS flow is a QoS flow in the one or more QoS flows included in the second NAS session. The access network device determines, based on the identification information of the second QoS flow, a radio bearer corresponding to the second QoS flow. Further, the access network device sends the second NAS message to the terminal device over the radio bearer corresponding to the second QoS flow.

In an uplink transmission scenario or a downlink transmission scenario, if the terminal device or the second network element sends a NAS message together with identification information of a QoS flow corresponding to the NAS message, the identification information of the QoS flow may be included in an unencrypted header of the NAS message, or may be included in one message with the NAS message for sending.

It may be understood that S601 to S603 are described by using an example in which the radio bearer is configured for each QoS flow included in the second NAS session. The method for configuring a radio bearer for each QoS flow included in a NAS session provided in this embodiment of this application may be applied to the second NAS session, and may further be adaptively applied to another NAS session, for example, a first NAS session. This is not limited in this embodiment of this application. For example, if a radio bearer is configured for each QoS flow included in the first NAS session, the first network element may send, to the access network device, a request message for requesting to configure the radio bearer corresponding to each QoS flow included in the first NAS session, and the access network device configures, based on the request message, the radio bearer corresponding to each QoS flow included in the first NAS session. The first network element may send the request message to the access network device in a process of establishing the first NAS session or after establishment of the first NAS session is completed. For details, refer to the foregoing descriptions of S601 to S603. Details are not described herein again.

Optionally, in the foregoing embodiments, the embodiment shown in FIG. 3, the embodiment shown in FIG. 5, and the embodiment shown in FIG. 6 may be independently applied, or may be applied in combination. This is not limited in embodiments of this application.

It may be understood that the procedures shown in FIG. 3 to FIG. 6 are merely logical schematic procedures provided for ease of understanding of embodiments of this application, and do not represent an actual time sequence of embodiments of this application. A time sequence between different steps in the procedures shown in FIG. 3 to FIG. 6 is not limited in embodiments of this application.

The foregoing mainly describes the solutions provided in embodiments of this application from a perspective of interaction between the network elements. Correspondingly, an embodiment of this application further provides a communication apparatus, and the communication apparatus is configured to implement the foregoing methods. The communication apparatus may be the first network element, the second network element, the access network device, or the terminal device in the foregoing method embodiments; an apparatus including the first network element, the second network element, the access network device, or the terminal device; or a component that may be used in the first network element, the second network element, the access network device, or the terminal device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by using hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be understood that division into modules in embodiments of this application is an example, and is merely logical function division. During actual implementation, there may be another division manner.

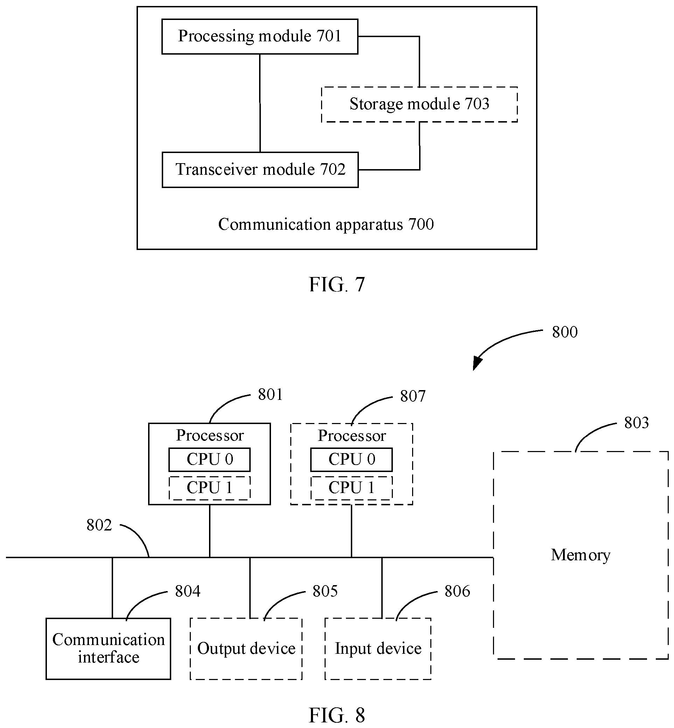

FIG. 7 is a diagram of a structure of a communication apparatus 700. The communication apparatus 700 includes a processing module 701 and a transceiver module 702. Optionally, the communication apparatus 700 may further include a storage module 703. The transceiver module 702 may also be referred to as a transceiver unit, and is configured to implement a transceiver function, for example, may be a transceiver circuit, a transceiver machine, a transceiver, or a communication interface.

For example, the communication apparatus 700 is the terminal device in the foregoing embodiments. In a possible implementation:
The transceiver module 702 is configured to send a first request message to a first network element via a first NAS session. The first NAS session is used for transmission of a NAS message between the terminal device and the first network element. The first request message is used to request a service; the first request message is used to request a service, and is further used to request establishment of a second NAS session; or the first request message is used to request establishment of a second NAS session. The transceiver module 702 is further configured to receive an identifier of the second NAS session, where the second NAS session is used for transmission of a NAS message between the terminal device and a second network element. The transceiver module 702 is further configured to send a first NAS message to the second network element via the second NAS session based on the identifier of the second NAS session.

Optionally, the transceiver module 702 is further configured to receive first indication information, where the first indication information indicates the terminal device to activate a security mode for the second NAS session. The security mode includes one or more of the following: performing encryption on a NAS message transmitted via the second NAS session, or performing integrity protection on a NAS message transmitted via the second NAS session. The processing module 701 is configured to activate the security mode for the second NAS session based on the first indication information.

Optionally, the processing module 701 is further configured to generate a key of the second NAS session based on a root key of the first NAS session and the identifier of the second NAS session, where the key of the second NAS session includes at least one of the following keys: a key used to encrypt the NAS message transmitted via the second NAS session or a key used to perform integrity protection on the NAS message transmitted via the second NAS session.

Optionally, that the processing module 701 activates the security mode for the second NAS session based on the first indication information includes: performing verification on the first indication information by using the key of the second NAS session, where the key of the second NAS session includes at least one of the following keys: the key used to encrypt the NAS message transmitted via the second NAS session or the key used to perform integrity protection on the NAS message transmitted via the second NAS session; and if the verification succeeds, activate the security mode.

Optionally, that the transceiver module 702 sends the first request message to the first network element via the first NAS session includes: sending an RRC message to an access network device, where the RRC message includes the first request message. The RRC message is sent over a radio bearer corresponding to the first NAS session, and/or the RRC message includes an identifier of the first NAS session. The radio bearer corresponding to the first NAS session or the identifier of the first NAS session is used by the access network device to determine to send the first request message to the first network element.

Optionally, that the transceiver module 702 sends the first NAS message to the second network element via the second NAS session includes: sending an RRC message to the access network device, where the RRC message includes the first NAS message. The RRC message is sent over a radio bearer corresponding to the second NAS session, and/or the RRC message includes the identifier of the second NAS session. The radio bearer corresponding to the second NAS session or the identifier of the second NAS session is used by the access network device to determine to send the first NAS message to the second network element.

Optionally, the transceiver module 702 is further configured to receive second information from the access network device, where the second information is used to configure one or more radio bearers corresponding to the second NAS session. That the transceiver module 702 sends the first NAS message to the second network element via the second NAS session includes: sending the first NAS message to the second network element over the radio bearer corresponding to the second NAS session.

Optionally, the second NAS session includes one or more QoS flows, and that the transceiver module 702 sends the first NAS message to the second network element via the second NAS session includes: sending the first NAS message to the second network element over a radio bearer corresponding to a first QoS flow. The first NAS message corresponds to the first QoS flow, and the one or more QoS flows include the first QoS flow.

Optionally, the transceiver module 702 is further configured to receive a mapping rule, where the mapping rule includes a correspondence between the first NAS message and the first QoS flow. The transceiver module 702 is further configured to receive third information from the access network device, where the third information is used to configure the radio bearer corresponding to the first QoS flow.

For example, the communication apparatus 700 is the first network element in the foregoing embodiments. In a possible implementation:
The transceiver module 702 is configured to receive a first request message from a terminal device via a first NAS session, where the first NAS session is a NAS session established between the terminal device and the first network element, and is used for transmission of a NAS message between the terminal device and the first network element. The first request message is used to request a service; the first request message is used to request a service, and is further used to request establishment of a second NAS session; or the first request message is used to request establishment of a second NAS session. The processing module 701 is configured to trigger establishment of the second NAS session, where the second NAS session is used for transmission of a NAS message between the terminal device and a second network element.

Optionally, the processing module 701 is further configured to obtain an identifier of the second NAS session. The transceiver module 702 is further configured to send the identifier of the second NAS session to the second network element.

Optionally, the processing module 701 is further configured to determine, based on subscription information of the terminal device, whether establishment of the second NAS session is allowed. That the processing module 701 triggers establishment of the second NAS session includes: when the first network element determines that establishment of the second NAS session is allowed, triggering establishment of the second NAS session.

Optionally, that the processing module 701 triggers establishment of the second NAS session includes: when the subscription information of the terminal device indicates to create the second NAS session for the service, triggering establishment of the second NAS session.

Optionally, the transceiver module 702 is further configured to send a fifth request message to the second network element. The transceiver module 702 is further configured to receive fourth information from the second network element, where the fourth information indicates to establish the second NAS session. That the processing module 701 triggers establishment of the second NAS session includes: triggering establishment of the second NAS session based on the fourth information.

Optionally, the processing module 701 is further configured to select, based on first information, the second network element from a network element that provides the service, where the first request message includes the first information, or the subscription information of the terminal device includes the first information.

Optionally, that the processing module 701 triggers establishment of the second NAS session includes: sending a second request message to the second network element through the transceiver module 702, where the second request message is used to request establishment of the second NAS session.

Optionally, the processing module 701 is further configured to generate a root key of the second NAS session based on a root key of the first NAS session and the identifier of the second NAS session.

Optionally, the transceiver module 702 is further configured to receive first indication information from the second network element, where the first indication information indicates the terminal device to activate a security mode for the second NAS session. The security mode includes one or more of the following: performing encryption on a NAS message transmitted via the second NAS session, or performing integrity protection on a NAS message transmitted via the second NAS session. The first network element sends the first indication information to the terminal device.

Optionally, the transceiver module 702 is further configured to send a third request message to the access network device, where the third request message is used to request establishment of the second NAS session, and the third request message includes the identifier of the second NAS session.

Optionally, the transceiver module 702 is further configured to receive second indication information from the second network element, where the second indication information indicates to establish the second NAS session. That the transceiver module 702 sends the third request message to the access network device includes: sending the third request message to the access network device based on the second indication information.

Optionally, the transceiver module 702 is further configured to send the identifier of the second NAS session to the terminal device.

Optionally, the transceiver module 702 is further configured to receive a first identifier from the access network device.

For example, the communication apparatus 700 is the second network element in the foregoing embodiments. In a possible implementation:
The transceiver module 702 is configured to receive a second request message from a first network element, where the second request message is used to request establishment of a second NAS session, and the second NAS session is used for transmission of a NAS message between a terminal device and the second network element. In addition, there is a first NAS session used for transmission of a NAS message between the first network element and the terminal device. The transceiver module 702 is further configured to send a first response message for the second request message to the first network element.

Optionally, the transceiver module 702 is further configured to send a third request message to an access network device, where the third request message is used to request the access network device to establish the second NAS session, and the third request message includes address information of the second network element and an identifier of the second NAS session.

Optionally, that the transceiver module 702 sends the third request message to the access network device includes: sending the third request message to the access network device based on the address information of the access network device and a first identifier.

Optionally, the transceiver module 702 is further configured to send a second response message to the terminal device using the third request message, where the second response message indicates that the second NAS session is successfully established, and the second response message includes the identifier of the second NAS session.

Optionally, the transceiver module 702 is further configured to receive a fifth request message from the first network element, where the fifth request message is used to request a service. The transceiver module 702 is further configured to send fourth information to the first network element based on the fifth request message, where the fourth information indicates to establish the second NAS session.

Optionally, the transceiver module 702 is further configured to receive a third response message from the access network device, where the third response message includes the address information of the access network device and a second identifier, and the second identifier indicates a context of the second NAS session in the access network device.

Optionally, the transceiver module 702 is further configured to send first indication information to the first network element, where the first indication information indicates the terminal device to activate a security mode for the second NAS session, and the security mode includes one or more of the following: performing encryption on a NAS message transmitted via the second NAS session, or performing integrity protection on a NAS message transmitted via the second NAS session.

Optionally, the transceiver module 702 is further configured to send the first indication information to the terminal device via the second NAS session, where the first indication information indicates the terminal device to activate the security mode for the second NAS session, and the security mode includes one or more of the following: performing encryption on a NAS message transmitted via the second NAS session, or performing integrity protection on a NAS message transmitted via the second NAS session.

Optionally, the processing module 701 is further configured to obtain a key of the second NAS session, where the key of the second NAS session includes at least one of the following keys: a key used for the encryption or a key used for the integrity protection. The processing module 701 is further configured to perform at least one of the encryption or the integrity protection on the first indication information by using the key of the second NAS session. The transceiver module 702 is further configured to send the first indication information to the terminal device.

Optionally, that the processing module 701 obtains the key of the second NAS session includes: generating the key of the second NAS session based on a root key of the second NAS session, where the second request message includes the root key of the second NAS session, or subscription information of the terminal device includes the root key of the second NAS session.

Optionally, the processing module 701 is further configured to obtain security capability information of the terminal device, where the security capability information indicates one or more of the following algorithms supported by the terminal device: an encryption algorithm or an integrity protection algorithm. The processing module 701 is further configured to determine, based on the security capability information of the terminal device, a security algorithm corresponding to the second NAS session, where the security algorithm includes one or more of the following algorithms: an algorithm used for encryption or an algorithm used for integrity protection.

Optionally, the second NAS session includes one or more QoS flows, and the transceiver module 702 is further configured to send a mapping rule to the terminal device, where the mapping rule includes a correspondence between a NAS message transmitted via the second NAS session and each of the one or more QoS flows.

Optionally, the second NAS session includes one or more QoS flows, and the transceiver module 702 is further configured to send a fourth request message to the access network device, where the fourth request message is used to request to configure a radio bearer corresponding to each of the one or more QoS flows.

Optionally, the transceiver module 702 is further configured to send, via the second NAS session, a second NAS message and identification information of a second QoS flow corresponding to the second NAS message, where the identification information of the second QoS flow is used by the access network device to determine and send the second NAS message to the terminal device via the second NAS session.

For example, the communication apparatus 700 is the access network device in the foregoing embodiments. In a possible implementation:
The transceiver module 702 is configured to receive a third NAS message from a terminal device. The processing module 701 is configured to determine a target network element of the third NAS message based on a third NAS session to which the third NAS message belongs. The transceiver module 702 is further configured to send the third NAS message to the target network element.

Optionally, that the transceiver module 702 receives the third NAS message from the terminal device includes: receiving, from the terminal device, the third NAS message and an identifier of the third NAS session to which the third NAS message belongs. That the processing module 701 determines the target network element of the third NAS message based on the third NAS session to which the third NAS message belongs includes: determining the target network element of the third NAS message based on the identifier of the third NAS session and a first correspondence, where the first correspondence includes a correspondence between the identifier of the third NAS session and the target network element of the third NAS message.

Optionally, that the processing module 701 determines the target network element of the third NAS message based on the third NAS session to which the third NAS message belongs includes: determining the target network element of the third NAS message based on a radio bearer used for transmission of the third NAS message and a second correspondence, where the second correspondence includes a correspondence between the radio bearer used for transmission of the third NAS message, the third NAS session to which the third NAS message belongs, and the target network element of the third NAS message.

Optionally, the transceiver module 702 is further configured to receive, from a third network element, a fourth NAS message and the identifier of the third NAS session to which the fourth NAS message belongs. The processing module 701 is further configured to determine, based on the identifier of the third NAS session, the third NAS session to which the fourth NAS message belongs.

Optionally, the transceiver module 702 is further configured to receive the fourth NAS message and a third identifier from the third network element, where the third identifier indicates a context of the third NAS session to which the fourth NAS message belongs in the access network device. The processing module 701 is further configured to determine, based on the third identifier, the third NAS session to which the fourth NAS message belongs.

Optionally, the transceiver module 702 is further configured to: send the fourth NAS message and the identifier of the third NAS session to the terminal device, and/or send the fourth NAS message to the terminal device over a radio bearer corresponding to the third NAS session.

Optionally, the transceiver module 702 is further configured to receive a third request message, where the third request message is used to request establishment of the third NAS session, the third request message includes the identifier of the third NAS session and address information of the third network element, and the third NAS session is used for transmission of a NAS message between the terminal device and the third network element. The transceiver module 702 is further configured to send a third response message to the third network element based on the address information of the third network element, where the third response message includes address information of the access network device and the third identifier, and the third identifier indicates the context of the third NAS session in the access network device.

Optionally, the transceiver module 702 is further configured to receive a fourth request message from the third network element, where the fourth request message is used to request to configure a radio bearer corresponding to each of one or more QoS flows included in the third NAS session. The processing module 701 is further adapted to configure the corresponding radio bearer for each QoS flow based on the fourth request message.

Optionally, the transceiver module 702 is further configured to receive, from the third network element, the fourth NAS message and identification information of a QoS flow corresponding to the fourth NAS message, where the one or more QoS flows included in the third NAS session include the QoS flow corresponding to the fourth NAS message. The processing module 701 is further configured to determine, based on the identification information of the QoS flow corresponding to the fourth NAS message, a radio bearer corresponding to the fourth NAS message. The transceiver module 702 is further configured to send the fourth NAS message to the terminal device over the radio bearer.

For example, the communication apparatus 700 is the access network device in the foregoing embodiments. In another possible implementation:
The transceiver module 702 is configured to receive a fourth request message from a second network element, where the fourth request message is used to request to configure a radio bearer corresponding to each of one or more QoS flows included in a second NAS session. The second NAS session is used for transmission of a NAS message between a terminal device and the second network element. The processing module 701 is adapted to configure the corresponding radio bearer for each QoS flow based on the fourth request message. The transceiver module 702 is further configured to send third information to the terminal device, where the third information is used to configure the radio bearer corresponding to each QoS flow.

Optionally, the fourth request message further includes a mapping rule, and the mapping rule includes a correspondence between a NAS message transmitted via the second NAS session and each QoS flow. The transceiver module 702 is further configured to send the mapping rule to the terminal device.

Optionally, the transceiver module 702 is further configured to receive a first NAS message from the terminal device. The processing module 701 is further configured to determine, based on a radio bearer used for transmission of the first NAS message, that the first NAS message corresponds to a first QoS flow, and that the second NAS session includes the first QoS flow. The transceiver module 702 is further configured to send the first NAS message and identification information of the first QoS flow to the second network element.

Optionally, the transceiver module 702 is further configured to receive, from the terminal device, the first NAS message and identification information of the first QoS flow corresponding to the first NAS message, where the second NAS session includes the first QoS flow. Optionally, the transceiver module 702 is further configured to send the first NAS message and the identification information of the first QoS flow to the second network element.

Optionally, the transceiver module 702 is further configured to receive, from the second network element, a second NAS message and identification information of a second QoS flow corresponding to the second NAS message. The processing module 701 is further configured to determine, based on the identification information of the second QoS flow, a radio bearer corresponding to the second QoS flow. The transceiver module 702 is further configured to send the second NAS message to the terminal device over the radio bearer corresponding to the second QoS flow.

All related content of the steps in the foregoing method embodiments may be cited in function descriptions of the corresponding functional modules. Details are not described herein again.

Optionally, the module in FIG. 7 may also be referred to as a unit. For example, the processing module may be referred to as a processing unit, and the transceiver module may be referred to as a transceiver unit. In addition, in the embodiment shown in FIG. 7, a name of each unit may not be the name shown in the figure. For example, the transceiver module may alternatively be referred to as a communication module or a communication unit.

When each unit in FIG. 7 is implemented in a form of a software functional module and is sold or used as an independent product, the unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods in embodiments of this application. A storage medium for storing the computer software product includes any medium that can store program code, for example, a USB flash drive, a removable hard disk drive, a read-only memory (read-only memory, ROM), a random access memory (random access memory, RAM), a magnetic disk, or an optical disc.

In this embodiment of this application, the communication apparatus 700 is presented in a form of functional modules obtained through division in an integrated manner. The "module" herein may be an application-specific integrated circuit (application-specific integrated circuit, ASIC), a circuit, a processor that executes one or more software programs or firmware programs, a memory, an integrated logic circuit, and/or another device that can provide the foregoing function.

In a simple embodiment, a person skilled in the art may figure out that the communication apparatus 700 may be in a form of a communication apparatus shown in FIG. 8.

As shown in FIG. 8, the communication apparatus 800 includes one or more processors 801, a communication line 802, and at least one communication interface (in FIG. 8, an example in which a communication interface 804 and one processor 801 are included is merely used for description). Optionally, the communication apparatus 800 may further include a memory 803.

The processor 801 may be a general-purpose central processing unit (central processing unit, CPU), a microprocessor, an ASIC, or one or more integrated circuits configured to control program execution of the solutions of this application.

The communication line 802 may include a path for connecting different components.

The communication interface 804 may be a transceiver module, and is configured to communicate with another device or a communication network, for example, the Ethernet, a RAN, a terminal, or a wireless local area network (wireless local area network, WLAN). For example, the transceiver module may be an apparatus, for example, a transceiver or a transceiver machine. Optionally, the communication interface 804 may alternatively be a transceiver circuit or an input/output interface located in the processor 801, and is configured to implement signal inputting and signal outputting of the processor.

The memory 803 may be an apparatus having a storage function. For example, the memory 803 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto. The memory may exist independently, and may be connected to the processor through the communication line 802. The memory may alternatively be integrated with the processor.

The memory 803 is configured to store computer-executable instructions for executing the solution of this application, and the processor 801 controls execution. The processor 801 is configured to execute the computer-executable instructions stored in the memory 803, to implement the communication method provided in embodiments of this application.

Alternatively, optionally, in embodiments of this application, the processor 801 may perform the processing-related function in the communication method provided in the foregoing embodiments of this application, and the communication interface 804 is responsible for communication with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 807 in FIG. 8. Each of these processors may be a single-core (single-core) processor, or may be a multi-core (multi-core) processor. The processor herein may include but is not limited to at least one of the following various types of compute devices that run software: a CPU, a microprocessor, a digital signal processor (digital signal processing, DSP), a microcontroller unit (microcontroller unit, MCU), or an artificial intelligence processor, where each compute device may include one or more cores for executing software instructions to perform an operation or processing.

During specific implementation, in an embodiment, the communication apparatus 800 may further include an output device 805 and an input device 806. The output device 805 communicates with the processor 801, and may display information in a plurality of manners. For example, the output device 805 may be a liquid crystal display (liquid crystal display, LCD), a light emitting diode (light emitting diode, LED) display device, a cathode ray tube (cathode ray tube, CRT) display device, or a projector (projector). The input device 806 communicates with the processor 801, and may receive an input of a user in a plurality of manners. For example, the input device 806 may be a mouse, a keyboard, a touchscreen device, or a sensor device.

The communication apparatus 800 may also be referred to as a communication device sometimes, and may be a general-purpose device or a dedicated device. For example, the communication apparatus 800 may be various network elements, the access network device, or a device having a structure similar to that in FIG. 8. A type of the communication apparatus 800 is not limited in embodiments of this application.

In addition, the composition structure shown in FIG. 8 does not constitute a limitation on the communication apparatus. In addition to the components shown in FIG. 8, the communication apparatus 800 may include more or fewer components than those shown in the figure, a combination of some components, or a different component layout.

Optionally, the processor 801 in the communication apparatus 800 shown in FIG. 8 may invoke the computer-executable instructions stored in the memory 803 to implement the functions/implementation processes of the transceiver module 702 and the processing module 701 in FIG. 7. Alternatively, the processor 801 in the communication apparatus 800 shown in FIG. 8 may invoke the computer-executable instructions stored in the memory 803 to implement the function/implementation process of the processing module 701 in FIG. 7, and the communication interface 804 in the communication apparatus 800 shown in FIG. 8 may implement the function/implementation process of the transceiver module 702 in FIG. 7.

It should be understood that one or more of the modules or units may be implemented by using software, hardware, or a combination thereof. When any one of the modules or units is implemented by using software, the software exists in a form of computer program instructions, and is stored in a memory, and a processor may be configured to execute the program instructions and implement the foregoing method procedures. The processor may be built into a SoC or an ASIC, or may be an independent semiconductor chip. In addition to a core that is configured to execute software instructions to perform an operation or processing, the processor may further include a necessary hardware accelerator, for example, an FPGA, a programmable logic device (programmable logic device, PLD), or a logic circuit that implements a dedicated logic operation.

When the foregoing module or unit is implemented by using hardware, the hardware may be any one or any combination of a CPU, a microprocessor, a DSP chip, an MCU, an artificial intelligence processor, an ASIC, an SoC, an FPGA, a PLD, a dedicated digital circuit, a hardware accelerator, or a non-integrated discrete device, which may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method according to any one of the foregoing method embodiments. In a possible design, the communication apparatus further includes a memory. The memory is configured to store necessary program instructions and data. The processor may invoke program code stored in the memory, to indicate the communication apparatus to perform the method according to any one of the foregoing method embodiments. Certainly, the memory may alternatively not be in the communication apparatus. When the communication apparatus is a chip system, the communication device may include a chip, or may include a chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is caused to perform the method according to any one of the foregoing method embodiments or the implementations thereof.

Optionally, an embodiment of this application further provides a communication system. The communication system includes the plurality of devices described in the foregoing method embodiments, for example, includes the first network element, the second network element, the access network device, and the terminal device.

All or some of the foregoing embodiments may be implemented by using software, hardware, firmware, or any combination thereof. When a software program is used to implement embodiments, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the scope of this application. Correspondingly, the specification and accompanying drawings are merely example descriptions of this application defined by the appended claims, and are considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A communication method, wherein the method comprises:
sending a first request message to a first network element via a first non-access stratum session, wherein the first request message is used to request a service, the service is provided by a second network element, and the first non-access stratum session is used for transmission of a non-access stratum message between a terminal device and the first network element;
receiving an identifier of a second non-access stratum session, wherein the second non-access stratum session is used for transmission of a non-access stratum message between the terminal device and the second network element; and
sending a first non-access stratum message to the second network element via the second non-access stratum session based on the identifier of the second non-access stratum session.

2. The method according to claim 1, wherein
the first request message is further used to request establishment of a non-access stratum session between the terminal device and the second network element.

3. The method according to claim 2, wherein the first request message comprises the identifier of the second non-access stratum session.

4. The method according to any one of claims 1 to 3, wherein the method further comprises:
receiving first indication information, wherein the first indication information indicates the terminal device to activate a security mode for the second non-access stratum session, and the security mode comprises one or more of the following: performing encryption on a non-access stratum message transmitted via the second non-access stratum session, or performing integrity protection on a non-access stratum message transmitted via the second non-access stratum session; and
activating the security mode for the second non-access stratum session based on the first indication information.

5. The method according to claim 4, wherein the method further comprises:
generating a key of the second non-access stratum session based on a root key of the first non-access stratum session and the identifier of the second non-access stratum session, wherein the key of the second non-access stratum session comprises at least one of the following keys: a key used for the encryption or a key used for the integrity protection.

6. The method according to claim 4 or 5, wherein the activating the security mode for the second non-access stratum session based on the first indication information comprises:
performing verification on the first indication information by using a key of the second non-access stratum session, wherein the key of the second non-access stratum session comprises at least one of the following keys: a key used for the encryption or a key used for the integrity protection; and
if the verification succeeds, activating the security mode.

7. The method according to any one of claims 1 to 6, wherein the sending the first non-access stratum message to the second network element via the second non-access stratum session comprises:
sending a first message to an access network device, wherein the first message comprises the first non-access stratum message; the first message is sent over a radio bearer corresponding to the second non-access stratum session, and/or the first message comprises the identifier of the second non-access stratum session; and
wherein the radio bearer corresponding to the second non-access stratum session or the identifier of the second non-access stratum session is used by the access network device to determine to send the first non-access stratum message to the second network element.

8. The method according to any one of claims 1 to 7, wherein the sending the first request message to the first network element via the first non-access stratum session comprises:
sending a second message to an access network device, wherein the second message comprises the first request message; the second message is sent over a radio bearer corresponding to the first non-access stratum session, and/or the second message comprises an identifier of the first non-access stratum session; and
wherein the radio bearer corresponding to the first non-access stratum session or the identifier of the first non-access stratum session is used by the access network device to determine to send the first request message to the first network element.

9. The method according to any one of claims 1 to 8, wherein the first request message comprises first information, and the first information is used to select the second network element from a network element that provides the service.

10. The method according to any one of claims 1 to 9, wherein the method further comprises:
receiving second information from an access network device, wherein the second information is used to configure one or more radio bearers corresponding to the second non-access stratum session; and
the sending the first non-access stratum message to the second network element via the second non-access stratum session comprises:
sending the first non-access stratum message to the second network element over the radio bearer corresponding to the second non-access stratum session.

11. The method according to any one of claims 1 to 10, wherein the second non-access stratum session comprises one or more quality of service flows, and the sending the first non-access stratum message to the second network element via the second non-access stratum session comprises:
sending the first non-access stratum message to the second network element over a radio bearer corresponding to a first quality of service flow, wherein the first non-access stratum message corresponds to the first quality of service flow, and the one or more quality of service flows comprise the first quality of service flow.

12. The method according to claim 11, wherein the method further comprises:
receiving a mapping rule, wherein the mapping rule comprises a correspondence between the first non-access stratum message and the first quality of service flow; and
receiving third information from an access network device, wherein the third information is used to configure the radio bearer corresponding to the first quality of service flow.

13. A communication method, wherein the method comprises:
receiving, by a first network element, a first request message from a terminal device via a first non-access stratum session, wherein the first request message is used to request a service, the service is provided by a second network element, and the first non-access stratum session is used for transmission of a non-access stratum message between the terminal device and the first network element; and
triggering, by the first network element, establishment of a second non-access stratum session, wherein the second non-access stratum session is used for transmission of a non-access stratum message between the terminal device and the second network element.

14. The method according to claim 13, wherein the method further comprises:
sending, by the first network element, an identifier of the second non-access stratum session to the second network element.

15. The method according to claim 14, wherein the identifier of the second non-access stratum session is allocated by the terminal device to the second non-access stratum session, or is allocated by the first network element to the second non-access stratum session.

16. The method according to claim 13 or 14, wherein the first request message is further used to request establishment of a non-access stratum session between the terminal device and the second network element.

17. The method according to claim 16, wherein the triggering, by the first network element, establishment of the second non-access stratum session comprises:
triggering, by the first network element, establishment of the second non-access stratum session when subscription information of the terminal device indicates that establishment of a non-access stratum session between the terminal device and the second network element is allowed.

18. The method according to claim 17, wherein that the subscription information of the terminal device indicates that establishment of a non-access stratum session between the terminal device and the second network element is allowed comprises: the subscription information of the terminal device indicates that establishment of a non-access stratum session between the terminal device and the second network element is allowed for the service requested via the first request message.

19. The method according to any one of claims 13 to 15, wherein the method further comprises:
sending, by the first network element, a fifth request message to the second network element, wherein the fifth request message is used to request the service; and
receiving, by the first network element, fourth information from the second network element, wherein the fourth information indicates establishment of the second non-access stratum session; and
the triggering, by the first network element, establishment of the second non-access stratum session comprises:
triggering, by the first network element, establishment of the second non-access stratum session based on the fourth information.

20. The method according to any one of claims 13 to 19, wherein the method further comprises:
selecting, by the first network element based on first information, the second network element from a network element that provides the service, wherein the first request message comprises the first information, or subscription information of the terminal device comprises the first information.

21. The method according to any one of claims 13 to 20, wherein the triggering, by the first network element, establishment of the second non-access stratum session comprises:
sending, by the first network element, a second request message to the second network element, wherein the second request message is used to request establishment of the second non-access stratum session.

22. The method according to claim 21, wherein the second request message comprises a root key of the second non-access stratum session, the root key of the second non-access stratum session is used to generate a key of the second non-access stratum session, and the key of the second non-access stratum session comprises at least one of the following keys: a key used to perform encryption on a non-access stratum message transmitted via the second non-access stratum session, or a key used to perform integrity protection on a non-access stratum message transmitted via the second non-access stratum session.

23. The method according to claim 22, wherein the method further comprises:
generating, by the first network element, the root key of the second non-access stratum session based on a root key of the first non-access stratum session and the identifier of the second non-access stratum session.

24. The method according to any one of claims 21 to 23, wherein
the second request message further comprises security capability information of the terminal device, the security capability information indicates one or more encryption algorithms supported by the terminal device and/or one or more integrity protection algorithms supported by the terminal device, the security capability information is used to determine a security algorithm corresponding to the second non-access stratum session, and the security algorithm comprises at least one of the following algorithms: an encryption algorithm used to perform encryption on a non-access stratum message transmitted via the second non-access stratum session, or an integrity protection algorithm used to perform integrity protection on a non-access stratum message transmitted via the second non-access stratum session.

25. The method according to any one of claims 21 to 24, wherein the method further comprises:
receiving, by the first network element, first indication information from the second network element, wherein the first indication information indicates the terminal device to activate a security mode for the second non-access stratum session, and the security mode comprises one or more of the following: performing encryption on a non-access stratum message transmitted via the second non-access stratum session, or performing integrity protection on a non-access stratum message transmitted via the second non-access stratum session; and
sending, by the first network element, the first indication information to the terminal device.

26. The method according to any one of claims 21 to 25, wherein the second request message comprises address information of an access network device and a first identifier, the address information of the access network device is used to send a message to the access network device, and the first identifier indicates a context of the terminal device in the access network device.

27. The method according to claim 26, wherein before the sending, by the first network element, the second request message to the second network element, the method further comprises:
receiving, by the first network element, the first identifier from the access network device.

28. The method according to any one of claims 13 to 27, wherein the method further comprises:
sending, by the first network element, a third request message to an access network device, wherein the third request message is used to request establishment of the second non-access stratum session, and the third request message comprises an identifier of the second non-access stratum session.

29. The method according to claim 28, wherein the method further comprises:
receiving, by the first network element, second indication information from the second network element, wherein the second indication information indicates establishment of the second non-access stratum session; and
the sending, by the first network element, the third request message to the access network device comprises:
sending, by the first network element, the third request message to the access network device based on the second indication information.

30. The method according to any one of claims 13 to 29, wherein the method further comprises:
sending, by the first network element, an identifier of the second non-access stratum session to the terminal device.

31. A communication method, wherein the method comprises:
receiving, by a second network element, a second request message from a first network element, wherein the second request message is used to request establishment of a second non-access stratum session, the second non-access stratum session is used for transmission of a non-access stratum message between a terminal device and the second network element, and a first non-access stratum session used for transmission of a non-access stratum message exists between the first network element and the terminal device; and
sending, by the second network element, a first response message for the second request message to the first network element.

32. The method according to claim 31, wherein the first response message comprises a third request message, the third request message is used to request an access network device to establish the second non-access stratum session, and the third request message comprises address information of the second network element and an identifier of the second non-access stratum session.

33. The method according to claim 31, wherein
the first response message comprises second indication information, the second indication information indicates an access network device to establish the second non-access stratum session, the second indication information is used to trigger the first network element to send a third request message to the access network device, and the third request message is used to request establishment of the second non-access stratum session.

34. The method according to claim 31, wherein the method further comprises:
sending, by the second network element, a third request message to an access network device, wherein the third request message is used to request the access network device to establish the second non-access stratum session, and the third request message comprises address information of the second network element and an identifier of the second access stratum session.

35. The method according to claim 34, wherein the second request message comprises address information of the access network device and a first identifier, the first identifier indicates a context of the terminal device in the access network device, and the sending, by the second network element, the third request message to the access network device comprises:
sending, by the second network element, the third request message to the access network device based on the address information of the access network device and the first identifier.

36. The method according to claim 34 or 35, wherein the method further comprises:
sending, by the second network element, a second response message to the terminal device using the third request message, wherein the second response message indicates that the second non-access stratum session is successfully established, and the second response message comprises the identifier of the second non-access stratum session.

37. The method according to any one of claims 31 to 36, wherein before the receiving, by the second network element, the second request message from the first network element, the method further comprises:
receiving, by the second network element, a fifth request message from the first network element, wherein the fifth request message is used to request a service, and the service is provided by the second network element; and
sending, by the second network element, fourth information to the first network element based on the fifth request message, wherein the fourth information indicates establishment of the second non-access stratum session.

38. The method according to any one of claims 31 to 37, wherein the method further comprises:
receiving, by the second network element, a third response message from an access network device, wherein the third response message comprises address information of the access network device and a second identifier, and the second identifier indicates a context of the second non-access stratum session in the access network device.

39. The method according to any one of claims 31 to 38, wherein the first response message comprises an identifier of the second non-access stratum session.

40. The method according to any one of claims 31 to 39, wherein the method further comprises:
sending, by the second network element, first indication information to the first network element, wherein the first indication information indicates the terminal device to activate a security mode for the second non-access stratum session, and the security mode comprises one or more of the following: performing encryption on a non-access stratum message transmitted via the second non-access stratum session, or performing integrity protection on a non-access stratum message transmitted via the second non-access stratum session.

41. The method according to any one of claims 31 to 39, wherein the method further comprises:
sending, by the second network element, first indication information to the terminal device via the second non-access stratum session, wherein the first indication information indicates the terminal device to activate a security mode for the second non-access stratum session, and the security mode comprises one or more of the following: performing encryption on a non-access stratum message transmitted via the second non-access stratum session, or performing integrity protection on a non-access stratum message transmitted via the second non-access stratum session.

42. The method according to claim 40 or 41, wherein the method further comprises:
obtaining, by the second network element, a key of the second non-access stratum session, wherein the key of the second non-access stratum session comprises at least one of the following keys: a key used for the encryption or a key used for the integrity protection; and
performing, by the second network element by using the key of the second non-access stratum session, at least one of the encryption or the integrity protection on the first indication information.

43. The method according to claim 42, wherein the obtaining, by the second network element, the key of the second non-access stratum session comprises:
generating, by the second network element, the key of the second non-access stratum session based on a root key of the second non-access stratum session, wherein the second request message comprises the root key of the second non-access stratum session, or subscription information of the terminal device comprises the root key of the second non-access stratum session.

44. The method according to any one of claims 40 to 43, wherein the method further comprises:
obtaining, by the second network element, security capability information of the terminal device, wherein the security capability information indicates one or more encryption algorithms supported by the terminal device and/or one or more integrity protection algorithms supported by the terminal device; and
determining, by the second network element based on the security capability information of the terminal device, a security algorithm corresponding to the second non-access stratum session, wherein the security algorithm comprises one or more of the following algorithms: an encryption algorithm used for the encryption or an integrity protection algorithm used for the integrity protection.

45. The method according to claim 44, wherein the second request message comprises the security capability information, and/or subscription information of the terminal device comprises the security capability information.

46. The method according to any one of claims 31 to 45, wherein the second non-access stratum session comprises one or more quality of service flows, and the method further comprises:
sending, by the second network element, a mapping rule to the terminal device, wherein the mapping rule comprises a correspondence between a non-access stratum message transmitted via the second non-access stratum session and each of the one or more quality of service flows.

47. The method according to any one of claims 31 to 46, wherein the second non-access stratum session comprises one or more quality of service flows, and the method further comprises:
sending, by the second network element, a fourth request message to an access network device, wherein the fourth request message is used to request to configure a radio bearer corresponding to each of the one or more quality of service flows.

48. The method according to claim 46 or 47, wherein the method further comprises:
sending, by the second network element via the second non-access stratum session, a second non-access stratum message and identification information of a second quality of service flow corresponding to the second non-access stratum message, wherein the identification information of the second quality of service flow is used by an access network device to determine and send the second non-access stratum message to the terminal device via the second non-access stratum session.

49. A communication method, wherein the method further comprises:
receiving, by an access network device, a third non-access stratum message from a terminal device;
determining, by the access network device, that the third non-access stratum message belongs to a third non-access stratum session, wherein the third non-access stratum session is a non-access stratum session between the terminal device and a third network element; and
sending, by the access network device, the third non-access stratum message to the third network element.

50. The method according to claim 49, wherein the receiving, by the access network device, the third non-access stratum message from the terminal device comprises:
receiving, by the access network device, the third non-access stratum message and an identifier of the third non-access stratum session from the terminal device; and
the determining, by the access network device, that the third non-access stratum message belongs to the third non-access stratum session comprises:
determining, by the access network device based on the identifier of the third non-access stratum session, that the third non-access stratum message belongs to the third non-access stratum session.

51. The method according to claim 50, wherein the method further comprises:
determining, by the access network device based on the identifier of the third non-access stratum session and a first correspondence, that a target network element of the third non-access stratum message is the third network element, wherein the first correspondence comprises a correspondence between the identifier of the third non-access stratum session and information about the target network element of the third non-access stratum message.

52. The method according to claim 49, wherein the determining, by the access network device, that the third non-access stratum message belongs to the third non-access stratum session comprises:
determining, by the access network device based on a radio bearer used for transmission of the third non-access stratum message, that the third non-access stratum message belongs to the third non-access stratum session.

53. The method according to claim 52, wherein the method further comprises:
determining, by the access network device based on the radio bearer used for transmission of the third non-access stratum message and a second correspondence, that a target network element of the third non-access stratum message is the third network element, wherein the second correspondence comprises a correspondence between the radio bearer used for transmission of the third non-access stratum message, an identifier of the third non-access stratum session, and information about the target network element of the third non-access stratum message.

54. The method according to any one of claims 49 to 53, wherein the method further comprises:
receiving, by the access network device, a fourth non-access stratum message from the third network element;
determining, by the access network device, that the fourth non-access stratum message belongs to the third non-access stratum session; and
sending, by the access network device, the fourth non-access stratum message and the identifier of the third non-access stratum session to the terminal device; and/or
sending, by the access network device, the fourth non-access stratum message to the terminal device over a radio bearer corresponding to the third non-access stratum session.

55. The method according to claim 54, wherein the receiving, by the access network device, the fourth non-access stratum message from the third network element comprises:
receiving, by the access network device, the fourth non-access stratum message and the identifier of the third non-access stratum session from the third network element; and
the determining, by the access network device, that the fourth non-access stratum message belongs to the third non-access stratum session comprises:
determining, by the access network device based on an identifier of the third non-access stratum session, that the fourth non-access stratum message belongs to the third non-access stratum session.

56. The method according to claim 54, wherein the receiving, by the access network device, the fourth non-access stratum message from the third network element comprises:
receiving, by the access network device, the fourth non-access stratum message and a third identifier from the third network element, wherein the third identifier indicates a context of the third non-access stratum session in the access network device; and
the determining, by the access network device, that the fourth non-access stratum message belongs to the third non-access stratum session comprises:
determining, by the access network device based on the third identifier, that the fourth non-access stratum message belongs to the third non-access stratum session.

57. The method according to any one of claims 49 to 56, wherein the method further comprises:
receiving, by the access network device, a third request message, wherein the third request message is used to request establishment of the third non-access stratum session, and the third non-access stratum session is used for transmission of a non-access stratum message between the terminal device and the third network element; and
sending, by the access network device, a third response message to the third network element, wherein the third response message comprises address information of the access network device and a third identifier, and the third identifier indicates a context of the third non-access stratum session in the access network device.

58. The method according to claim 57, wherein the method further comprises:
receiving, by the access network device, a fourth request message from the third network element, wherein the fourth request message is used to request to configure a radio bearer corresponding to each of one or more quality of service flows comprised in the third non-access stratum session; and
configuring, by the access network device based on the fourth request message, the radio bearer corresponding to each quality of service flow.

59. The method according to claim 58, wherein the method further comprises:
receiving, by the access network device, a fourth non-access stratum message and identification information of a quality of service flow corresponding to the fourth non-access stratum message from the third network element, wherein the one or more quality of service flows comprise the quality of service flow corresponding to the fourth non-access stratum message;
determining, by the access network device based on the identification information of the quality of service flow corresponding to the fourth non-access stratum message, a radio bearer corresponding to the fourth non-access stratum message; and
sending, by the access network device, the fourth non-access stratum message to the terminal device over the radio bearer corresponding to the fourth non-access stratum message.

60. A communication method, wherein the method comprises:
receiving, by an access network device, a fourth request message from a second network element, wherein the fourth request message is used to request to configure a radio bearer corresponding to each of one or more quality of service flows comprised in a second non-access stratum session, and the second non-access stratum session is used for transmission of a non-access stratum message between a terminal device and the second network element;
configuring, by the access network device, the corresponding radio bearer for each quality of service flow based on the fourth request message; and
sending, by the access network device, third information to the terminal device, wherein the third information is used to configure the radio bearer corresponding to each quality of service flow.

61. The method according to claim 60, wherein the fourth request message further comprises a mapping rule, the mapping rule comprises a correspondence between a non-access stratum message transmitted via the second non-access stratum session and each quality of service flow, and the method further comprises:
sending, by the access network device, the mapping rule to the terminal device.

62. The method according to claim 60 or 61, wherein the method further comprises:
receiving, by the access network device, a first non-access stratum message from the terminal device;
determining, by the access network device based on a radio bearer used for transmission of the first non-access stratum message, that the first non-access stratum message corresponds to a first quality of service flow, and that the second non-access stratum session comprises the first quality of service flow; and
sending, by the access network device, the first non-access stratum message and identification information of the first quality of service flow to the second network element.

63. The method according to claim 60 or 61, wherein the method further comprises:
receiving, by the access network device, a first non-access stratum message and identification information of a first quality of service flow corresponding to the first non-access stratum message from the terminal device, wherein the second non-access stratum session comprises the first quality of service flow; and
sending, by the access network device, the first non-access stratum message and identification information of the first quality of service flow to the second network element.

64. The method according to any one of claims 60 to 63, wherein the method further comprises:
receiving, by the access network device, a second non-access stratum message and identification information of a second quality of service flow corresponding to the second non-access stratum message from the second network element;
determining, by the access network device based on the identification information of the second quality of service flow, a radio bearer corresponding to the second quality of service flow; and
sending, by the access network device, the second non-access stratum message to the terminal device over the radio bearer corresponding to the second quality of service flow.

65. A communication apparatus, wherein the communication apparatus comprises a module or a unit configured to perform the method according to any one of claims 1 to 12, claims 13 to 30, claims 31 to 48, claims 49 to 59, or claims 60 to 64.

66. A communication apparatus, wherein the communication apparatus comprises a processor, and the processor is configured to execute a computer program or instructions stored in a memory, to cause the communication apparatus to perform the method according to any one of claims 1 to 12, claims 13 to 30, claims 31 to 48, claims 49 to 59, or claims 60 to 64.

67. A computer-readable storage medium, wherein the computer-readable storage medium stores a computer program or instructions, and when the computer program or the instructions are executed by a computer, the computer is caused to perform the method according to any one of claims 1 to 12, claims 13 to 30, claims 31 to 48, claims 49 to 59, or claims 60 to 64.

68. A communication system, wherein the communication system comprises a first network element and a second network element, the first network element is configured to perform the method according to any one of claims 13 to 30, and the second network element is configured to perform the method according to any one of claims 31 to 48.

69. The communication system according to claim 68, wherein the communication system further comprises an access network device, and the access network device is configured to perform the method according to any one of claims 49 to 59, or the access network device is configured to perform the method according to any one of claims 60 to 64.
